# EUROPÄISCHE PATENTSCHRIFT

(11) **EP 3 721 109 B1**
(45) Veröffentlichungstag und Bekanntmachung des Hinweises auf die Patenterteilung: **15.09.2021**
(21) Anmeldenummer: 18811462.3
(22) Anmeldetag: 16.11.2018
(51) Int. Cl.: F16D 21/08, F16D 25/061, F16D 25/10

(54) **KUPPLUNGSEINRICHTUNG**
COUPLING DEVICE
DISPOSITIF D'ACCOUPLEMENT

(30) Priorität: 06.12.2017 DE 102017221974
(43) Veröffentlichungstag der Anmeldung: 14.10.2020
(73) Patentinhaber: ZF Friedrichshafen AG, 88046 Friedrichshafen (DE)
(72) Erfinder: KUNDERMANN, Wolfgang, 65599 Dornburg-Dorndorf (DE); GROSSPIETSCH, Wolfgang, 97422 Schweinfurt (DE)
(74) Vertreter: ZF Friedrichshafen AG
(86) Internationale Anmeldenummer: PCT/EP2018/081570
(87) Internationale Veröffentlichungsnummer: WO 2019/110277

(56) Entgegenhaltungen:
- DE-A1-102008 014 108
- DE-A1-102015 111 356
- FR-A1- 2 604 228
- US-B2- 9 746 038

## Beschreibung

Die vorliegende Erfindung betrifft eine Kupplungseinrichtung gemäß dem Oberbegriff des Anspruchs 1.

Nasslaufende-Kupplungen in Kupplungseinrichtungen mit geschlossenem Gehäuse in Öl-Vollfüllung eignen sich besonders gut als Anfahrkupplungen für Fahrzeuge. Die zur Kühlung verwendete Öl-Vollfüllung erzeugt jedoch bei offener Kupplung und Differenzdrehzahl zwischen dem Eingangsbereich einer derartigen Kupplungseinrichtung und ihrem Ausgangsbereich ein hohes Schleppmoment, wodurch derartige Kupplungseinrichtungen bei Hybrid-Fahrzeugen zu einer Reduzierung der Reichweite führen, da die als Elektromotor ausgebildete zweite Antriebseinheit in einem rein elektrischen Fahrbetrieb, also bei offener Kupplung, das Schleppmoment der Kupplungseinrichtung durchgehend zu überwinden hat.

Aus der Druckschrift DE 10 2008 014 108 A1 sind dem Fachmann Kupplungseinrichtungen gemäß dem Oberbegriff des Anspruchs 1 bekannt, bei welchen eine Koppeleinrichtung zwischen dem Ausgangsbereich der Kupplungseinrichtung und der in der Kupplungseinrichtung vorliegenden Lamellenkupplung vorgesehen ist, um eine Drehmomentübertragungsverbindung zwischen dem Ausgangsbereich und der Lamellenkupplung zu unterbrechen. Die Betätigung der Koppeleinrichtung erfolgt jedoch über Anlage eines Kontaktelements, welches von einem zur Betätigung der Kupplungsanordnung verwendeten Kolben angetrieben wird, an einem Element der Koppeleinrichtung, wodurch die Kupplungseinrichtung dieses Standes der Technik einen komplexen Aufbau aufweist.

Ferner zeigt die Druckschrift DE 10 2015 111356 A1 eine ähnliche Kupplungseinrichtung.

Eine Aufgabe der vorliegenden Erfindung ist es somit eine Kupplungseinrichtung mit einfachem Aufbau bereitzustellen, die zumindest in einem Betriebszustand ein verringertes Schleppmoment aufweist.

Diese Aufgabe wird durch eine Kupplungseinrichtung nach Anspruch 1 gelöst. Bevorzugte Ausführungsformen der Erfindung sind in den Unteransprüchen beschrieben.

In einer Ausführungsform der Erfindung wird eine Kupplungseinrichtung zur Anordnung in einem Kraftfahrzeug-Antriebsstrang zwischen einer vorzugsweise brennkraftmotorischen Antriebseinheit und einer vorzugsweise wenigstens ein Getriebe aufweisenden Abtriebsanordnung bereitgestellt; umfassend einen der Antriebseinheit zugeordneten Eingangsbereich und wenigstens einen der Abtriebsanordnung zugeordneten Ausgangsbereich; wobei ein am Eingangsbereich in die Kupplungseinrichtung eingeleitetes Antriebsdrehmoment über wenigstens eine in einem Innenraum eines vorzugsweise eingangsbereichsseitigen Kupplungsgehäuses der Kupplungseinrichtung angeordnete nasslaufende Kupplungsanordnung zum Ausgangsbereich übertragbar ist, die wenigstens einen eingangsbereichseitigen Kupplungsbereich und wenigstens einen mit dem eingangsbereichseitigen Kupplungsbereich in reibschlüssigen Drehmomentübertragungseingriff bringbaren ausgangsbereichsseitigen Kupplungsbereich aufweist. Zwischen dem ausgangsbereichsseitigen Kupplungsbereich der nasslaufenden Kupplungsanordnung und dem Ausgangsbereich ist eine Koppeleinrichtung vorgesehen, die in einem Koppelzustand eine Drehmomentübertragungsverbindung zwischen dem ausgangsbereichsseitigen Kupplungsbereich und dem Ausgangsbereich für die Übertragung des Antriebsdrehmoments zum Ausgangsbereich herstellt und die in einem Entkoppelzustand den Ausgangsbereich von dem ausgangsbereichsseitigen Kupplungsbereich abkoppelt unter Unterbrechung der Drehmomentübertragungsverbindung. Es wird vorgeschlagen, dass ein Betriebsmedium für den Nasslaufbetrieb der Kupplungsanordnung in das Kupplungsgehäuse wahlweise über eine erste Anschlussanordnung in den Innenraum zuführbar und über eine zweite Anschlussanordnung aus dem Innenraum abführbar ist zur Realisierung einer ersten Betriebsmediumflussrichtung oder über die zweite Anschlussanordnung in den Innenraum zuführbar und über die erste Anschlussanordnung aus dem Innenraum abführbar ist zur Realisierung einer zweiten Betriebsmediumflussrichtung; und dass die Koppeleinrichtung unter Vermittlung des Betriebsmediums zwischen dem Koppelzustand und dem Entkoppelzustand überführbar ist durch Umsteuerung des Betriebsmediumflusses durch den Innenraum zwischen der ersten und der zweiten Betriebsmediumflussrichtung. Da das vorzugsweise zur Kühlung der nasslaufenden Kupplungsanordnung vorgesehene Betriebsmedium üblicherweise in derartigen Kupplungseinrichtungen einer Zirkulation zur Verbesserung des Wärmeaustausches und/oder zur Steuerung einer Drehmomentübertragungsverbindung der Kupplungsanordnung unterworfen ist, kann das für die Zirkulation des Betriebsmediums verwendete System ohne signifikante Änderungen gleichzeitig zur Betätigung der Koppeleinrichtung verwendet werden. Dies ist insbesondere bei sogenannten Zweileitungssystemen, bei welchen die nasslaufende Kupplungsanordnung mittels einer Richtungsänderung eines Betriebsmittelstroms betätigt werden kann, von Vorteil, da in diesem Fall das das für die Zirkulation des Betriebsmediums verwendete System bereits eine Umsteuerung des Betriebsmediumflusses erlaubt.

Die Koppeleinrichtung kann ein bezogen auf eine Drehachse der Kupplungseinrichtung axial zwischen einer dem Koppelzustand zugeordneten Koppelstellung und einer dem Entkoppelzustand zugeordneten Entkoppelstellung verschiebbares Koppelelement umfassen, welches in der Koppelstellung mit dem Ausgangsbereich und dem ausgangsbereichsseitigen Kupplungsbereich in Drehmitnahmeverbindung steht und in der Entkoppelstellung von zumindest einem von dem Ausgangsbereich und dem ausgangsbereichsseitigen Kupplungsbereich abgekoppelt ist unter Unterbrechung der Drehmitnahmeverbindung. Verschiebbare Elemente zur Herstellung einer Drehmitnahmeverbindung sind dem Fachmann beispielsweise aus Getrieben bekannt und stellen ein einfaches und zuverlässiges Mittel dar, um eine trennbare Drehmitnahmeverbindung auszubilden.

Es ist möglich, dass das Koppelelement einen ersten axialen Druckaufnahmebereich und einen entgegengesetzten zweiten axialen Druckaufnahmebereich aufweist und in Abhängigkeit von einer Druckdifferenz von an diesen Druckaufnahmebereichen wirkenden Betriebsmediumdrücken axial von der Koppelstellung in Richtung zur Entkoppelstellung und von der Entkoppelstellung in Richtung zur Koppelstellung verstellbar ist. Dadurch dass die Druckaufnahmebereiche am Koppelelement ausgebildet sind, ist keine zusätzliche Mechanik, wie ein hydraulischer Nehmerzylinder oder anderer Aktuator, notwendig, um das Koppelelement zwischen der Entkoppelstellung und der Koppelstellung zu verstellen. Neben dem vereinfachten Aufbau der Kupplungseinrichtung entstehen auch keine Reibungsverluste durch eine Anlage eines Aktuators an dem Koppelelement.

Ferner kann das Koppelelement einen dem Ausgangsbereich zugeordneten ersten Eingriffsbereich und einen dem ausgangsbereichsseitigen Kupplungsbereich zugeordneten zweiten Eingriffsbereich aufweisen, wobei an dem Ausgangsbereich ein dem ersten Eingriffsbereich zugeordneter erster Gegeneingriffsbereich drehfest angebunden ist, wobei an dem ausgangsbereichsseitigen Kupplungsbereich ein dem zweiten Eingriffsbereich zugeordneter zweiter Gegeneingriffsbereich drehfest angebunden ist, wobei zwischen dem ersten Eingriffsbereich und dem ersten Gegeneingriffsbereich ein reibschlüssiger oder formschlüssiger Drehkopplungseingriff besteht oder durch axiale Verstellung des Koppelelements von der Entkoppelstellung in die Koppelstellung herstellbar ist und wobei zwischen dem zweiten Eingriffsbereich und dem zweiten Gegeneingriffsbereich ein reibschlüssiger oder formschlüssiger Drehkopplungseingriff besteht oder durch axiale Verstellung des Koppelelements von der Entkoppelstellung in die Koppelstellung herstellbar ist. Natürlich ist von dem von dem ersten Eingriffsbereich und dem ersten Gegeneingriffsbereich gebildeten Eingriffspaar und dem von dem zweiten Eingriffsbereich und dem zweiten Gegeneingriffsbereich gebildeten Eingriffspaar wenigstens ein Eingriffspaar nicht in ständigem Drehkoppeleingriff, sondern ist wahlweise durch axiale Verstellung des Koppelelements von der Entkoppelstellung in die Koppelstellung in den Drehkoppeleingriff bringbar. Ein derartiger Aufbau erlaubt dem Fachmann ein hohes Maß an Flexibilität während der Ausgestaltung der Kupplungseinrichtung.

Ein Paar bestehend aus erstem Eingriffsbereich und erstem Gegeneingriffsbereich oder/und ein Paar bestehend aus zweitem Eingriffsbereich und zweitem Gegeneingriffsbereich ist bevorzugt als ein Paar von Mitnahmeverzahnungen ausgebildet, wobei für das Paar von Mitnahmeverzahnungen insbesondre ein Paar aus Innenverzahnung und Außenverzahnung oder ein Paar aus Axialverzahnung und Gegenaxialverzahnung (z. B. jeweils eine planseitige Verzahnung) in Frage kommt.

In einer besonders einfachen Ausführungsform steht ein Eingriffspaar von dem von dem ersten Eingriffsbereich und dem ersten Gegeneingriffsbereich gebildeten Eingriffspaar und dem von dem zweiten Eingriffsbereich und dem zweiten Gegeneingriffsbereich gebildeten Eingriffspaar in ständigem Drehkopplungseingriff und das andere Eingriffspaar ist wahlweise durch axiale Verstellung des Koppelelements von der Entkoppelstellung in die Koppelstellung in den Drehkoppeleingriff bringbar.

Die Koppeleinrichtung kann mit einer Synchronisierungsanordnung ausgeführt sein, welche wenigstens ein mit dem Koppelelement in Drehmomentübertragungsverbindung stehendes oder bringbares, vorzugsweise relativ zu diesem axial verschiebbares Synchronisierungselement umfasst, welches im Zuge der Überführung der Koppeleinrichtung aus dem Entkoppelzustand in den Koppelzustand mit einem zugeordneten ausgangsbereichsseitigen oder kupplungseinrichtungsseitigen Synchronisierungsbereich in reibschlüssigen Synchronisierungseingriff bringbar ist, um eine Differenzdrehzahl zwischen dem Koppelelement und wenigstens einem von der Ausgangsseite und dem ausgangsbereichsseitigen Kupplungsbereich zu reduzieren und so die Positionierung des Koppelelements in der Koppelstellung zur Herstellung des Koppelzustands zu ermöglichen oder zu erleichtern. Die Reduzierung dieser Differenzdrehzahl verringert aufgrund einer Reduzierung der auftretenden Kräfte bei der Herstellung des Koppelzustands einen Verschleiß an dem Koppelelement und wenigstens einem von der Ausgangsseite und dem ausgangsbereichsseitigen Kupplungsbereich. Auch werden abrupte Drehmomentstöße in Folge der Herstellung des Kopplungszustandes vermieden oder zumindest gedämpft.

Es ist möglich, dass zumindest eines von dem Synchronisationsbereich und dem Synchronisationselement zumindest abschnittsweise eine Kegelabschnitt-Außenform und das andere von dem Synchronisationsbereich und dem Synchronisationselement zumindest abschnittsweise eine Hohlkegelabschnitt-Innenform aufweist. Durch diese einfache Ausgestaltung der oben genannten Innenform und Außenform kann eine Synchronisationsanordnung besonders einfach und somit kostengünstig ausgebildet sein.

Insbesondere kann das Synchronisierungselement einen ersten axialen Druckaufnahmebereich und einen entgegengesetzten zweiten axialen Druckaufnahmebereich aufweisen, wobei vermittels einer Druckdifferenz von an diesen Druckaufnahmebereichen wirkenden Betriebsmediumdrücken das Synchronisierungselement axial gegen den zugeordneten Synchronisierungsbereich verschiebbar ist, um den reibschlüssigen Synchronisierungseingriff mit diesem herzustellen. Dadurch, dass die Druckaufnahmebereiche am Synchronisierungselement ausgebildet sind, ist keine zusätzliche Mechanik, wie ein hydraulischer Nehmerzylinder oder ein anderer Aktuator, notwendig, um den reibschlüssigen Synchronisierungseingriff herstellen zu können. Neben dem vereinfachten Aufbau der Kupplungseinrichtung entstehen ferner keine Reibungsverluste durch eine Anlage eines Aktuators an dem Synchronisierungselement.

Die Synchronisationsanordnung kann dafür eingerichtet sein, eine entgegen einer axialen Relativbewegung zwischen dem Synchronisationselement und dem Koppelelement wirkende axiale Gegenkraft auszuüben, um einer Positionierung des Koppelelements in der Koppelstellung vor Reduzierung der Differenzdrehzahl auf eine Soll-Differenzdrehzahl entgegenzuwirken. Die Reduzierung dieser Differenzdrehzahl verringert aufgrund einer Reduzierung der auftretenden Kräfte bei der Positionierung des Koppelelements in die Koppelstellung hinein zumindest einen Verschleiß der Koppeleinrichtung und vermeidet oder dämpft ferner abrupte Drehmomentstöße bei der Positionierung des Koppelelements in die Koppelstellung hinein.

Dieser Effekt kann durch eine besonders einfache Ausgestaltung erreicht werden, wenn das Synchronisierungselement eine Verzahnung und das Koppelelement eine Gegenverzahnung aufweist, mittels der das Synchronisierungselement und das Koppelelement mit relativem Drehspiel miteinander gekoppelt sind, wobei das Synchronisierungselement und das Koppelelement entgegen einer elastischen Rückstellkraft aus einer Ruhestellung relativ zueinander in Richtung einer Anschlagstellung verdrehbar sind, um auf Basis eines reibschlüssigen Eingriffs zwischen den Verzahnungen zugeordneten Wirkflächen die axiale Gegenkraft zu erzeugen, wobei die Wirkflächen vorzugsweise Zahnflächen der Verzahnungen oder/und Oberflächenabschnitte einer zwischen den der Verzahnung und der Gegenverzahnung angeordneten, die elastische Rückstellkraft ausübenden, vorzugsweise von wenigstens einer Wellfeder gebildeten elastischen Einrichtung umfassen.

Ferner ist es möglich, einen Verschleiß während des Übergangs des Koppelelements in den Koppelzustand zu reduzieren, wenn der erste Eingriffsbereich und der erste Gegeneingriffsbereich oder/und der zweite Eingriffsbereich und der zweite Gegeneingriffsbereich des Koppelelements in gegenseitigem Eingriff stehende oder bringbare Mitnahmeverzahnungen aufweisen, von denen vorzugsweise wenigstens eine mit Abfasungen ausgeführt ist, welche, vorzugsweise nach Reduzierung der Differenzdrehzahl auf eine Soll-Differenzdrehzahl, ein Ineingriffbringen der betreffenden Mitnahmeverzahnungen des jeweiligen Eingriffsbereich und Gegeneingriffsbereich mechanisch unterstützen oder/und unter Mitwirkung des Betriebsmediums einer Positionierung des Koppelelements in der Koppelstellung vor Reduzierung der Differenzdrehzahl auf eine Soll-Differenzdrehzahl entgegenwirken. Die Mitwirkung des Betriebsmediums wird vorzugsweise dadurch erreicht, dass beim Auftreffen der Abfasungen einer Mitnahmeverzahnung des jeweiligen Eingriffsbereichs und Gegeneingriffsbereichs an der zugehörigen anderen Mitnahmeverzahnung des jeweiligen Eingriffsbereichs und Gegeneingriffsbereichs, oder seiner Gegenabfasungen, eine in axialer Richtung wirkende, der Auftreffbewegung entgegengesetzt wirkende Kraft aus dem Auftreffen resultiert, wobei ein aus dem Betriebsmedium ausgebildeter hydrodynamischer Schmierfilm an den Abfasungen oder den Abfasungen und Gegenabfasungen den Aufprall dämpft, wodurch Verschleiß und Geräuschentwicklung positiv beeinflusst werden. Dieser Effekt tritt insbesondere bei flachen Fasenwinkeln/Gegenfasenwinkeln auf, wobei der optimale Fasenwinkel und gegebenenfalls Gegenfasenwinkel bei gegebener Ausgestaltung der Mitnahmeverzahnungen und gewünschter Soll-Differenzdrehzahl durch Experimente vom Fachmann herausgefunden werden kann.

Erst unterhalb der Soll-Differenzdrehzahl ist die Zeit, während ein Verzahnungsspielwinkel als Relativwinkel zwischen dem jeweiligen Eingriffsbereich und Gegeneingriffsbereich überschritten wird, lang genug, um eine für die Kopplung zwischen dem jeweiligen Eingriffsbereich und Gegeneingriffsbereich notwendige Mindesteingriffstiefe der betreffenden Mitnahmeverzahnungen durch die Bewegung des Koppelelements in die Koppelstellung zu erreichen. Unterhalb der der Soll-Differenzdrehzahl können die Abfasungen oder die Abfasungen und Gegenabfasungen die Kopplung zwischen dem jeweiligen Eingriffsbereich und Gegeneingriffsbereich unterstützen, indem sie wie eine Führung für die Mitnahmeverzahnungen wirken.

Die Koppeleinrichtung kann eine das Koppelelement axial in Richtung zu der Entkoppelstellung oder - vorzugsweise - in Richtung zu der Koppelstellung elastisch vorspannende Vorspanneinrichtung aufweisen, die gewünschtenfalls wenigstens eine Tellerfeder umfasst. Die elastisch vorspannende Vorspanneinrichtung beschleunigt durch die Vorspannung den Übergang in die Entkoppelstellung oder in die Koppelstellung.

Insbesondere ist es möglich, dass die Vorspanneinrichtung an einem Element der Kupplungseinrichtung axial abgestützt ist, welches auch in dem Entkoppelzustand in Drehmitnahmeverbindung mit dem Koppelelement steht, wodurch Reibungsverluste zwischen der Vorspanneinrichtung und ihrer Abstützung aufgrund der fehlenden Differenzdrehzahl zwischen dieser und dem Koppelelement verhindert werden.

Die Vorspanneinrichtung kann eine nicht-lineare Kraft-Weg-Kennlinie derart aufweisen, dass die Vorspanneinrichtung auf das Koppelelement in einem Wegabschnitt zwischen der Koppelstellung und der Entkoppelstellung eine größere Vorspannkraft auf das Koppelelement ausübt als in der Koppelstellung und der Entkoppelstellung, wodurch verglichen mit einer Vorspanneinrichtung mit einer linearen Kraft-Weg-Kennlinie, bei gleichen Haltekräften wie im Fall der nicht-linearen Kraft-Weg-Kennlinie in der Entkoppelstellung und der Koppelstellung, eine höhere Beschleunigung durch die Vorspanneinrichtung erreicht werden kann, wenn das Koppelelement in Vorspannrichtung durch die Kraft der Vorspanneinrichtung angetrieben wird.

Es ist möglich, dass die Vorspanneinrichtung dafür eingerichtet ist, wenigstens eine von dem Betriebsmedium zumindest zeitweise durchströmte, auf das Koppelelement wirkende Betriebsmediumdrücke auf Grundlage des Betriebsmediumflusses beeinflussende Öffnung, vorzugsweise des Koppelelements, im Koppelzustand zu öffnen und im Entkoppelzustand zu verschließen. Sobald die Koppeleinrichtung in den Koppelzustand übergeht, kann signifikanter Schlupf unter Wärmeabgabe an der Kupplungsanordnung auftreten und die offenen Öffnungen begünstigen die Zirkulation des Betriebsmediums zur Kühlung der Kupplungsanordnung, insbesondere wenn parallel zum Übergang der Koppeleinrichtung in den Koppelzustand die Kupplungsanordnung einen Drehmomentübertragungseingriff zwischen dem eingangsbereichseitigen Kupplungsbereich und dem ausgangsbereichsseitigen Kupplungsbereich ausbildet. Sind diese Öffnungen im Entkoppelzustand verschlossen, so erlaubt dies den Aufbau eines höheren Druckabfalls des Betriebsmediums in Bereichen der Kupplungseinrichtung, welcher zur beschleunigten Betätigung der Kupplungseinrichtung verwendet werden kann.

Dieselben Effekte können zusätzlich verstärkt oder alternativ erreicht werden, indem wenigstens eine von dem Betriebsmedium zumindest zeitweise durchströmte, auf das Koppelelement wirkende Betriebsmediumdrücke auf Grundlage des Betriebsmediumflusses beeinflussende Öffnung, vorzugsweise eine Öffnung des Koppelelements, als Rückschlagventil ausgeführt ist, welches Betriebsmedium im Falle einer in den Koppelzustand überführenden Betriebsmediumflussrichtung Betriebsmedium maximal durchlässt und im Falle einer in den Entkoppelzustand überführenden Betriebsmediumflussrichtung kein Betriebsmedium durchlässt oder dieses maximal drosselt.

Ein hochgradig einfacher Aufbau der Kupplungseinrichtung ergibt sich, wenn die nasslaufende Kupplungsanordnung unter Vermittlung des Betriebsmediums durch Umsteuerung des Betriebsmediumflusses durch den Innenraum zwischen der ersten und der zweiten Betriebsmediumflussrichtung betätigbar ist, da keine separate Steuerung der Kupplungseinrichtung notwendig ist.

Um besonders hohe Drehmomente mit der Kupplungsanordnung übertragen zu können kann die nasslaufende Kupplungsanordnung alternativ unabhängig von dem Betriebsmediumfluss durch den Innenraum betätigbar sein, vorzugsweise mittels wenigstens einem dieser zugeordneten Nehmerzylinder, dem zur Betätigung der Kupplungsanordnung Druckmedium unabhängig von dem Betriebsmediumflusses durch den Innenraum zuführbar ist.

Zur Vermeidung oder Reduzierung von Torsionsschwingungen umfasst die Kupplungseinrichtung vorzugsweise eine Torsionsschwingungsdämpferanordnung, über die eine Drehmomentübertragungsverbindung zwischen dem ausgangsbereichsseitigen Kupplungsbereich und der Koppeleinrichtung hergestellt oder herstellbar ist. Zweckmäßig kann dabei die Koppeleinrichtung zwischen einem die Ausgangsseite bildenden, vorzugsweise als Nabe ausgeführten Verbindungselement zur Drehverbindung mit einer vorzugsweise als Drehwelle ausgeführten Eingangsseite der Abtriebsanordnung und einem vorzugsweise als Nabenscheibe ausgeführten Ausgangselement der Torsionsschwingungsdämpferanordnung wirksam sein. Da der Torsionsschwingungsdämpfer im Entkoppelzustand von der Antriebsanordnung entkoppelt ist, erreicht die vorgeschlagene Koppeleinrichtung eine erhebliche Reduzierung des angesprochenen Schleppmoments.

Die Kupplungseinrichtung mit Torsionsschwingungsdämpfer ist besonders einfach aufgebaut, wenn der erste Gegeneingriffsbereich einstückig mit dem Ausgangselement ausgeführt ist oder/und wenn der zweite Gegeneingriffsbereich einstückig mit dem Verbindungselement ausgeführt ist, da die Anzahl der Teile der Kupplungseinrichtung reduziert ist.

Vorzugsweise ist die Kupplungseinrichtung derart ausgebildet, dass zum Zeitpunkt des in-gegenseitigen-Eingriffbringens des zweiten Eingriffsbereichs und des zweiten Gegeneingriffsbereichs noch kein Drehmomentübertragungseingriff zwischen dem eingangsbereichsseitigen Kupplungsbereich und dem ausgangsbereichsseitigen Kupplungsbereich vorliegt, sodass nur das Trägheitsmoment der Torsionsschwingungsdämpferanordnung oder der Verbindungselemente zwischen dem ausgangsbereichsseitigen Kupplungsbereich und der Koppeleinrichtung die Anschlagenergie zwischen dem zweiten Eingriffsbereich und dem zweiten Gegeneingriffsbereich während dieses Vorgangs bestimmt.

Anzumerken ist, dass die Kupplungseinrichtung auch mehrere, insbesondere zwei Ausgangsbereiche etwa in der Form von auf Drehwellen drehfest angeordneten Ausgangsnaben aufweisen kann, etwa wenn die Kupplungseinrichtung eine Doppelkupplungsanordnung aufweist, die mit einem Doppelkupplungsgetriebe des Abtriebstrangs zusammenwirkt.

Eine Kupplungseinrichtung wie vorstehend beschrieben ist vorzugsweise Teil eines Kraftfahrzeug-Antriebsstrangs, welcher ferner eine vorzugsweise brennkraftmotorische erste Antriebseinheit und eine vorzugsweise wenigstens ein Getriebe aufweisende Abtriebsanordnung umfasst, wobei die oben beschriebene Kupplungseinrichtung zwischen der Antriebseinheit und der Abtriebsanordnung angeordnet ist zur Drehmomentübertragung zwischen der Antriebseinheit und der Abtriebsanordnung, wodurch Schleppmomente in dem Kraftfahrzeug-Antriebsstrang reduziert werden. Die Erfindung stellt neben der Kupplungseinrichtung auch einen solchen Kraftfahrzeug-Antriebsstrang bereit.

Der Kraftfahrzeug-Antriebsstrang kann ferner eine vorzugsweise elektromotorische zweite Antriebseinheit umfassen, welche mit einer Eingangsseite der Abtriebsanordnung in Drehmomentübertragungsverbindung steht oder bringbar ist, wodurch etwa ein Hybrid-Fahrzeug einfach ausgebildet werden kann.

Hierbei kann die Koppeleinrichtung in dem Entkoppelzustand eine Drehmomentübertragungsverbindung zwischen der zweiten Antriebseinheit und dem ausgangbereichsseitigen Kupplungsbereich unterbrechen, wodurch aufgrund des reduzierten Schleppmoments der Kupplungseinrichtung in dem Entkoppelzustand die Effizienz, mit der die zweite Antriebseinheit Antriebsleistung in den Antriebsstrang in dem Entkoppelzustand der Kupplungseinrichtung einleitet, erhöht ist.

Die Vorzüge des Antriebsstrangs übertragen sich auf ein Kraftfahrzeug, welches einen derartigen Antriebsstrang umfasst. Die Erfindung stellt auch ein solches Kraftfahrzeug bereit.

### Kurzbeschreibung der Figuren

Ausführungsformen der vorliegenden Erfindung werden anhand der beigefügten Zeichnungen erläutert, es zeigen:
Fig. 1 eine schematische Ansicht einer Kupplungseinrichtung mit Koppeleinrichtung einer ersten Ausführungsform in Schnittansicht in einem Entkoppelzustand;
Fig. 2 eine schematische Ansicht der Kupplungseinrichtung mit Koppeleinrichtung aus Fig. 1 in Schnittansicht in einem Koppelzustand;
Fig. 3 eine Explosionszeichnung von Elementen der Kupplungseinrichtung aus Fig. 1;
Fig. 4 eine Schnittansicht der Elemente aus Fig. 3 in einem zusammengebauten Zustand;
Fig. 5 eine Schnittansicht einer alternativen Ausführungsform einer Öffnung als Rückschlagventil;
Fig. 6 eine Aufsicht einer Nabenscheibe aus den Elementen aus Fig. 3;
Fig. 7 eine Schnittansicht der Nabenscheibe aus Fig. 6;
Fig. 8 eine nicht-lineare Kraft-Weg-Kennlinie einer Vorspanneinrichtung;
Fig. 9 eine Kraftfahrzeug-Antriebsstrang unter Auslassung der Darstellung einer ersten Antriebseinheit;
Fig. 10 eine schematische Ansicht einer Kupplungseinrichtung mit Koppeleinrichtung einer zweiten Ausführungsform in Schnittansicht in einem Entkoppelzustand;
Fig. 11 eine schematische Ansicht der Kupplungseinrichtung mit Koppeleinrichtung aus Fig. 10 in Schnittansicht in einem Koppelzustand;
Fig. 12 eine perspektivische Ansicht von Elementen der Kupplungseinrichtung aus Fig. 10;
Fig. 13 eine Aufsicht eines Übertragungselements aus den Elementen aus Fig. 12;
Fig. 14 eine Schnittansicht des Übertragungselements aus Fig. 13; und
Fig. 15 einen Ausschnitt aus Fig. 11 mit schematisch angedeutetem Betriebsmediumfluss.

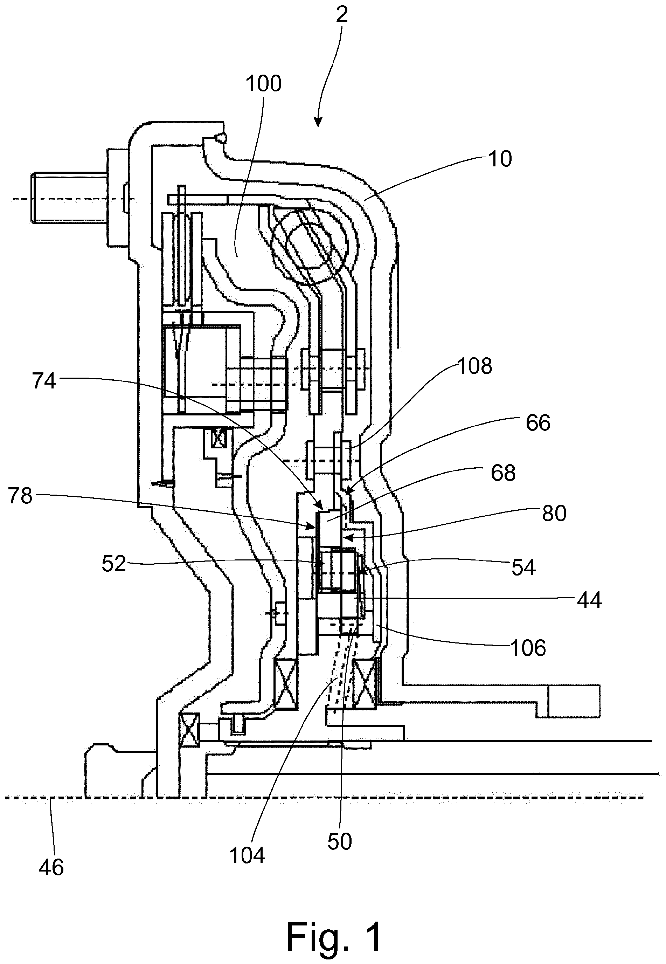

Figur 1 zeigt eine Kupplungseinrichtung 2, in welcher sich eine in einem Drehmomentübertragungspfad aufgenommene Koppeleinrichtung 4 der Kupplungseinrichtung 2 in einem Entkoppelzustand befindet. Die Kupplungseinrichtung 2 weist einen Eingangsbereich 6 auf, an welchem in einem Kraftfahrzeug-Antriebsstrang 102, welcher die Kupplungseinrichtung 2 umfasst, eine nicht gezeigte erste Antriebseinheit eine Antriebsleistung in den Kraftfahrzeug-Antriebsstrang 102, beispielsweise über eine sogenannte Flex-Platte, einbringt. Ferner weist die Kupplungseinrichtung 2 einen Ausgangsbereich 8, beispielsweise in Form einer drehfest auf einer Drehwelle, insbesondere Getriebeeingangswelle 28, aufgenommen Ausgangsnabe 26, auf, an welchem ein Drehmoment an eine Abtriebsanordnung 30, im Ausführungsbeispiel in der Form eines Getriebes, übertragen werden kann. Die Kupplungseinrichtung 2 weist ein Kupplungsgehäuse 10 auf, in dessen Innenraum 12 eine nasslaufende Kupplungsanordnung 14 vorgesehen ist. Die nasslaufende Kupplungsanordnung 14 weist einen eingangsbereichseitigen Kupplungsbereich 16 sowie einen ausgangsbereichsseitigen Kupplungsbereich 18 auf, welche in einen reibschlüssigen Drehmomentübertragungseingriff gebracht werden können und aus diesem Drehmomentübertragungseingriff gebracht werden können, wobei die nasslaufende Kupplungsanordnung 14 vorzugsweise als eine Lamellenkupplung ausgebildet ist. Der Drehmomentübertragungseingriff der nasslaufenden Kupplungsanordnung 14 kann über an einem Kolben 20 angreifende Drücke eines Betriebsmediums 100 gesteuert oder/und geregelt werden. Das Betriebsmedium 100 kann zur Kühlung der nasslaufenden Kupplungsanordnung 14 verwendet werden. Vorzugsweise liegt ein dauerhafter Drehmomentübertragungseingriff zwischen dem Eingangsbereich 6 und dem eingangsbereichseitigen Kupplungsbereich 16 vor.

Die Koppeleinrichtung 4 ist im Drehmomentübertragungspfad zwischen dem Eingangsbereich 6 und dem Ausgangsbereich 8 der Kupplungseinrichtung angeordnet. Die Drehmomentübertragungsverbindung zwischen dem ausgangsbereichsseitigen Kupplungsbereich 18 und der Koppeleinrichtung 4 kann beispielsweise über starre Elemente erfolgen, es wird jedoch bevorzugt, dass diese Drehmomentübertragungsverbindung über eine Torsionsschwingungsdämpferanordnung 22 erfolgt, wobei die Torsionsschwingungsdämpferanordnung 22 vorzugsweise eine Nabenscheibe 24 als eine beispielhafte Ausbildung eines Ausgangselements eines Torsionsschwingungsdämpfers der Torsionsschwingungsdämpferanordnung 22 aufweist. Wie weiter unten beschrieben, ist die Koppeleinrichtung 4 dafür eingerichtet, in einem Koppelzustand eine Drehmomentübertragungsverbindung zwischen dem ausgangsbereichsseitigen Kupplungsbereich 18 und dem Ausgangsbereich 8, welcher vorzugsweise als eine Ausgangsnabe 26 ausgebildet ist, herzustellen. Die Ausgangsnabe 26 ist vorzugsweise zur Drehverbindung mit einer als Getriebeeingangswelle 28 ausgebildeten Eingangsseite einer Abtriebsanordnung 30 ausgebildet. In einem Entkoppelzustand kann die Koppeleinrichtung den Ausgangsbereich 8 von dem ausgangsbereichsseitigen Kupplungsbereich 18 abkoppeln und die Drehmomentübertragungsverbindung dazwischen unterbrechen.

In der Kupplungseinrichtung wird das Betriebsmedium 100, insbesondere ein als ein Betriebsmedium geeignetes Öl, für den Nasslaufbetrieb der Kupplungseinrichtung 14 in das Kupplungsgehäuse über eine erste Anschlussanordnung 32 (z.B. durch die Getriebeeingangswelle 28) in einen ersten Bereich 34 des Innenraums 12 zugeführt oder aus diesem abgeführt, ferner wird das Betriebsmedium 100 über eine zweite Anschlussanordnung 36 (z.B. an dem Gehäuse 10) in einen zweiten Bereich 38 des Innenraums 12 zugeführt oder aus diesem abgeführt. Das oben beschriebene Zuführen und Abführen des Betriebsmediums 100 erfolgt vorzugsweise über eine nicht gezeigte Pumpenanordnung. Der erste Bereich 34 und der zweiten Bereich 38 können über mindestens eine Öffnung 92 und/oder über mindestens einen Durchgang 104 verbunden sein.

Wird über die erste Anschlussanordnung 32 Betriebsmedium 100 zugeführt und über die zweite Anschlussanordnung 36 Betriebsmedium 100 abgeführt, so wird eine erste Betriebsmediumflussrichtung 40 realisiert. Wird hingegen an der zweiten Anschlussanordnung 36 das Betriebsmedium 100 zugeführt und an der ersten Anschlussanordnung 32 abgeführt, so wird eine zweite Betriebsmediumflussrichtung 42 realisiert. Durch Wechsel zwischen der ersten Betriebsmediumflussrichtung 40 und der zweiten Betriebsmediumflussrichtung 42 wird eine Umsteuerung des Betriebsmediumflusses durch den Innenraum 12 realisiert. Wie weiter unten ausgeführt, erlaubt eine derartige Umsteuerung des Betriebsmediumflusses eine Überführung der Koppeleinrichtung 4 von dem Entkoppelzustand in den Koppelzustand, und umgekehrt. In entsprechender Weise und an sich bekannt erlaubt die Umsteuerung des Betriebsmediumflusses die Betätigung der vorzugsweise als Lammellenkupplung ausgebildeten nasslaufenden Kupplungsanordnung 14 mittels des Kolbens 20.

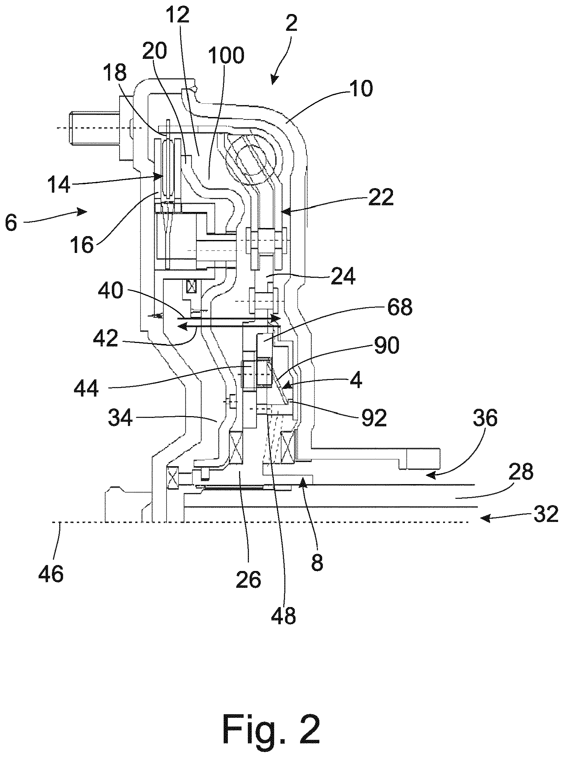

Die Koppeleinrichtung 4 umfasst vorzugsweise ein Koppelelement 44, welches bezogen auf eine Drehachse 46 der Kupplungseinrichtung 2 zwischen einer Koppelstellung 48, welche dem Koppelzustand zugeordnet ist (siehe Fig. 2), und einer Entkoppelstellung 50, welche dem Entkoppelzustand zugeordnet ist (siehe Fig. 1), axial verschiebbar ist. Die Drehachse 46 fällt vorzugsweise mit einer Drehachse der Ausgangsnabe 26 zusammen. In den in den Figuren gezeigten Ausführungsformen fällt die Drehachse 46 mit der Drehachse der Ausgangsnabe 26 zusammen und definiert vorzugsweise die Referenz für axiale Richtungen, Kräfte, Flächen usw. in einem zusammengebauten Zustand der Kupplungseinrichtung 2.

Vorzugsweise umfasst das Koppelelement 44 einen ersten axialen Druckaufnahmebereich 52 und einen zweiten axialen Druckaufnahmebereich 54, welcher dem ersten axialen Bereich 52 entgegengesetzt liegt. Beispielsweise ist das Koppelelement 44 im Wesentlichen scheibenförmig ausgebildet, sodass der erste axiale Druckaufnahmebereich 52 und der zweite axiale Druckaufnahmebereich 54 im Wesentlichen durch die zwei axialen Seiten der Scheibe repräsentiert werden. Liegt die erste Betriebsmediumflussrichtung 40 vor, so liegt in dem ersten Bereich 34 des Innenraums 12 ein höherer Druck als in dem zweiten Bereich 38 des Innenraums 12 vor und das Koppelelement 44 wird dann bei hinreichendem Druckabfall von der Koppelstellung 48 in Richtung zur Entkoppelstellung 50 aufgrund der Richtung des vorliegenden Druckgefälles verstellt.

Liegt hingegen die zweite Betriebsmediumflussrichtung 42 vor, so wird das Koppelelement 44 in Richtung von der Entkoppelstellung zur Koppelstellung hin verstellt aufgrund des in diesem Fall im zweiten Bereich 38 vorliegenden Drucks, welcher höher als der Druck im ersten Bereich 34 des Innenraums 12 ist, wodurch das Druckgefälle die entgegengesetzte Richtung verglichen mit dem Fall der ersten Betriebsmediumflussrichtung 40 aufweist, wobei wiederum eine hinreichender Druckabfall angenommen wird. Der Druckunterschied zwischen dem ersten Bereich 34 und dem zweiten Bereich 38 entsteht aufgrund der Strömung des Betriebsmediums 100 durch die mindestens eine Öffnung 92 und/oder den mindestens einen Durchgang 104, welche jeweils endliche Leitwerte aufweisen. Durch Steuerung oder Regelung des Betriebsmediumflusses kann die Druckdifferenz gesteuert oder geregelt werden.

Das Koppelelement 44 weist vorzugsweise einen dem Ausgangsbereich 8 zugeordneten ersten Eingriffsbereich 56 auf, welcher vorzugsweise als eine Innenverzahnung ausgebildet ist. Ebenso kann das Koppelelement 44 einen zweiten Eingriffsbereich 58 aufweisen, welcher vorzugsweise zumindest jeweils abschnittsweise als eine Axial- und/oder Außenverzahnung ausgebildet ist. An der Ausgangsnabe 26 kann ein erster Gegeneingriffsbereich 60 ausgebildet sein, welcher vorzugsweise als eine Außenverzahnung ausgebildet ist. Der erste Gegeneingriffsbereich 60 ist somit vorzugsweise am Ausgangsbereich 8 drehfest angebunden.

Der erste Eingriffsbereich 56 und der erste Gegeneingriffsbereich 60 stehen vorzugsweise ständig in einem formschlüssigen Drehkopplungseingriff, indem der etwa als Außenverzahnung an der Ausgangsnabe 26 ausgebildete erste Gegeneingriffsbereich 60 in den etwa als Innenverzahnung am Koppelelement 44 ausgebildeten ersten Eingriffsbereich 56 ständig eingreift. Vorzugsweise weist der als Außenverzahnung ausgebildete erste Gegeneingriffsbereich 60 eine größere Länge als das Koppelelement 44 auf, jeweils in axialer Richtung der Drehachse 46, wodurch das Koppelelement 44 vorzugsweise in axialer Richtung der Drehachse 46 der Kupplungseinrichtung gegenüber der Ausgangsnabe 26 verschiebbar ist.

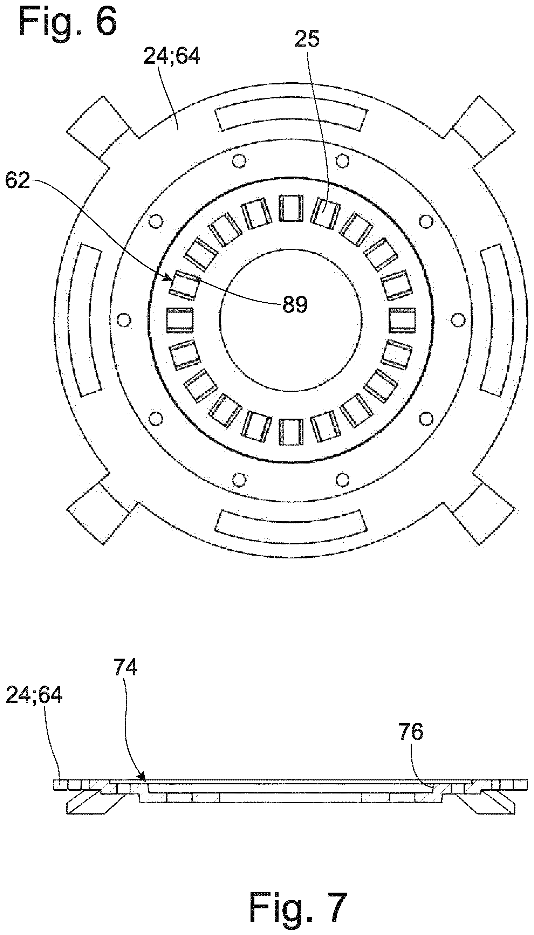

An dem ausgangsbereichsseitigen Kupplungsbereich 18 ist vorzugsweise ein zweiter Gegeneingriffsbereich 62 drehfest angebunden (siehe Fig. 6), welcher zweckmäßig einstückig mit einem Ausgangselement 64 der Torsionsschwingungsdämpferanordnung 22, insbesondere der Nabenscheibe 24, ausgebildet sein kann. Ist der zweite Eingriffsbereich 58 zumindest abschnittsweise als eine Axialverzahnung (z.B. eine planseitige Verzahnung) ausgebildet, so kann der zweite Gegeneingriffsbereich 62 als eine Gegenaxialverzahnung ausgebildet sein, welche vorzugsweise in die Nabenscheibe 24, z.B. als Öffnungen 25, gestanzt ist. Der Übersicht halber ist in den Figuren nur eine Öffnung 25 mit Bezugszeichen versehen.

Ein Drehkopplungseingriff durch Formschluss zwischen dem vorzugsweise zumindest abschnittsweise als eine Axialverzahnung ausgebildeten zweiten Eingriffsbereich 58 und dem vorzugsweise als eine Gegenaxialverzahnung ausgebildeten Gegeneingriffsbereich 62 kann hergestellt werden, indem das Koppelelement 44 axial in Bezug auf die Drehachse 46 in die Koppelstellung 48 verschoben wird. Dieser Drehkopplungseingriff wird durch eine Verschiebung des Koppelelements 44 axial in Bezug auf die Drehachse 46 in die Entkoppelstellung 50 gelöst.

Allgemein gesprochen bildet der erste Eingriffsbereich und der erste Gegeneingriffsbereich ein Eingriffspaar und der zweite Eingriffsbereich und der zweite Gegeneingriffsbereich ein zweites Eingriffspaar, wobei von diesen Eingriffspaaren vorzugsweise eines in ständigem Drehkopplungseingriff steht, insbesondere das durch den als Außenverzahnung ausgebildeten ersten Gegeneingriffsbereich 60 und den als Innenverzahnung ausgebildeten ersten Eingriffsbereich 56 gebildeten Eingriffspaar, und das andere Eingriffspaar kann in einen Drehkoppeleingriff gebracht und aus diesem Drehkoppeleingriff gebracht werden, insbesondere durch die oben beschriebenen Verschiebungen des Koppelelements 44 von der Koppelstellung 48 in die Entkoppelstellung 50, und umgekehrt.

Die oben beschriebene Koppeleinrichtung 4 umfasst somit ein Koppelelement 44, welches in der Koppelstellung 48 mit dem Ausgangsbereich 8 und dem ausgangsbereichsseitigen Kupplungsbereich 18 in Drehmitnahmeverbindung steht und in der Entkoppelstellung 50 von zumindest einem von dem Ausgangsbereich 8 und dem ausgangsbereichsseitigen Kupplungsbereich 18 abgekoppelt ist unter Unterbrechung der Drehmitnahmeverbindung.

Die angesprochenen Drehkopplungseingriffe sind oben als formschlüssige Eingriffe beschrieben worden, es ist jedoch möglich, zumindest einen reibschlüssigen Drehkopplungseingriff zu verwenden. Für die angesprochenen Eingriffs- und Gegeneingriffsbereiche 56, 60, 58, 62 bzw. Innen- und Außenverzahnung(en) oder Axialverzahnung und Gegenaxialverzahnung(en) kommt neben der bevorzugten einstückigen Ausbildung am jeweiligen Element auch eine mehrstückige Realisierung durch Anbindung eines diesen Bereich aufweisenden gesonderten Bestandteils am jeweiligen Element in Betracht.

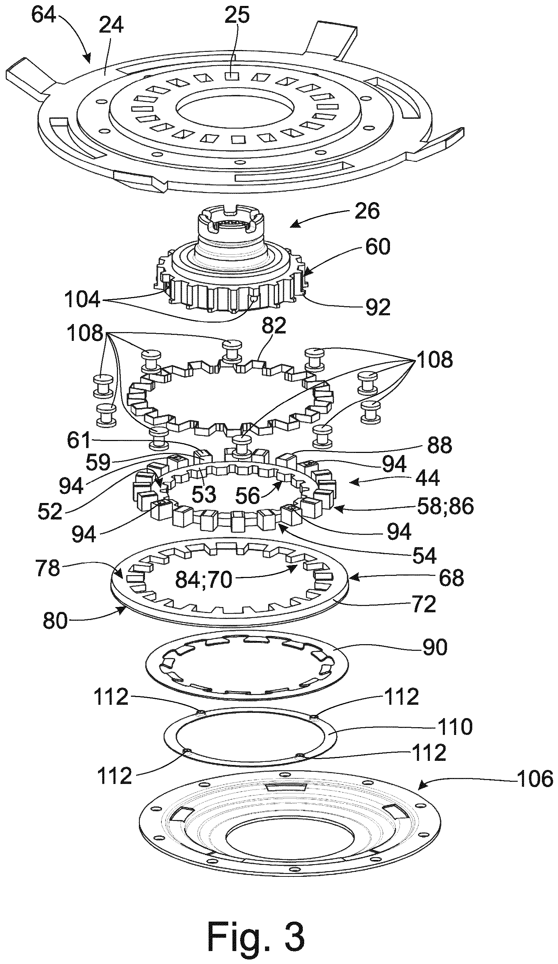

Um die Herstellung des Drehkoppeleingriffs zwischen dem zweiten Eingriffsbereich 58 und dem zweiten Gegeneingriffsbereich 62 zu erleichtern, weist die Kupplungseinrichtung 2 vorzugsweise eine Synchronisierungsanordnung 66 auf, welche ein Synchronisierungselement 68 umfasst. Das Synchronisierungselement 68 ist vorzugsweise axial bezogen auf die Drehachse 46 relativ zum Koppelelement 44 verschiebbar und ist zumindest in einen eine Drehmomentübertragungsverbindung herstellenden Synchronisierungseingriff mit diesem bringbar. Vorzugsweise weist das Synchronisierungselement 68 eine Innenverzahnung 70 auf, welche in eine Gegenverzahnung 86 des Koppelelements 44 eingreifen kann, vorzugsweise dauerhaft in Eingriff zur Drehmomentübertragung ist. Die Gegenverzahnung 86 des Koppelelements 44 ist vorzugsweise als Abschnitt des zweiten Eingriffsbereichs 58 als Außenverzahnung ausgebildet. Entsprechend weist die Ausgestaltung des zweiten Eingriffsbereichs 58 vorzugsweise einen Axialverzahnungsabschnitt auf, welcher in der ersten Ausführungsform als die sich in Fig. 3 in Richtung der Nabenscheibe 24, über eine durch eine Ebene 53 des Koppelelements 44 definierte Fläche hinaus erstreckenden Abschnitte 59 von Zähnen 61 ausgebildet ist. Die Zähne 61 können sich über die gesamte axiale Länge des Koppelelements 44 erstrecken und ein Außenumfangsabschnitt der Zähne 61 kann für die Innenverzahnung 70 als zugeordnete Außenverzahnung dienen und somit die Gegenverzahnung 86 ausbilden. Übersichtshalber ist in Fig. 3 nur ein Abschnitt 59 und ein Zahn 61 mit einem Bezugszeichen versehen. Der zweite Eingriffsbereichs 58 umfasst somit vorzugsweise die Gegenverzahnung 86 des Koppelelements 44; ferner kann die Innenverzahnung 70 eine Ausbildung einer Verzahnung des Synchronisierungselements 68 sein, wobei diese Spezialfälle nicht beschränkend sind.

Um Wiederholungen bei der Beschreibung des im Folgenden beschriebenen Zusammenspiels zwischen der Synchronisierungsanordnung 66, dem zweiten Eingriffsbereich 58 und dem zweiten Gegeneingriffsbereich 62 zu vermeiden kann hierfür bei der ersten Ausführungsform angenommen werden, dass der zweite Eingriffsbereich 58 die Gegenverzahnung 86 des Koppelelements 44 als Außenverzahnung in Form eines Außenumfangsabschnitts der Zähne 61 umfasst, wobei der Außenumfangsabschnitt der Zähne 61 am Außenumfang eines Axialverzahnungsabschnitts des zweiten Eingriffsbereichs 58 vorgesehen ist, wobei der Axialverzahnungsabschnitt des zweiten Eingriffsbereichs 58 eingerichtet ist, um in den zweiten Gegeneingriffsbereich 62 einzugreifen, welcher wiederum als Gegenaxialverzahnung ausgebildet ist.

Das Synchronisierungselement 68 weist vorzugsweise an einem Abschnitt außen eine Kegelabschnitt-Außenform 72 auf, mittels welcher es mit einem kupplungseinrichtungsseitigen Synchronisierungsbereich 74 (siehe Fig. 7) in reibschlüssigen Synchronisierungseingriff bringbar ist. Der Synchronisierungsbereich 74 ist vorzugsweise drehfest mit dem ausgangsbereichsseitigen Kupplungsbereich 18, insbesondere der Nabenscheibe 24, vorzugsweise einstückig mit der Nabenscheibe 24, ausgebildet. Es wird bevorzugt, dass der Synchronisierungsbereich 74 drehfest mit dem zweiten Gegeneingriffsbereich 62 ausgebildet ist.

Der Synchronisierungsbereich 74 kann ferner an einem Abschnitt eine Hohlkegelabschnitt-Innenform 76 aufweisen. Über den reibschlüssigen Synchronisierungseingriff kann ein Drehmoment zwischen dem Synchronisierungsbereich 74 und dem Synchronisierungselement 68 übertragen werden, sodass, aufgrund der vorzugsweise drehfesten Verbindung zwischen dem Synchronisierungsbereich 74 und dem ausgangsbereichsseitigen Kupplungsbereich 8 und der vorzugsweise drehfesten Verbindung zwischen dem Koppelelement 44 und dem Synchronisierungselement 68, eine Differenzdrehzahl zwischen dem Koppelelement 44 und dem ausgangsbereichsseitigen Kupplungsbereich 8 bei Drehmomentübertragung reduziert wird.

Wird das Koppelelement 44 bei Vorliegen der zweiten Betriebsmediumflussrichtung 42 einem hohen Druck im zweiten Bereich 38 und einem geringeren Druck im ersten Bereich 34 des Innenraums 12 ausgesetzt, so führt die Druckdifferenz zwischen dem ersten Bereich 34 und dem zweiten Bereich 38 nicht nur zu einer Bewegung des Koppelelements 44, sondern diese Drücke können auch an einem ersten axialen Druckaufnahmebereich 78 des Synchronisierungselements 68 und einem zweiten axialen Druckaufnahmebereich 80 des Synchronisierungselements 68 angreifen, sodass das Synchronisierungselement 68 gegen den Synchronisierungsbereich 74 gedrückt wird und mit diesem in den reibschlüssigen Synchronisierungseingriff gebracht wird. Die Lösung dieses reibschlüssigen Synchronisierungseingriff erfolgt durch Invertierung der Druckverhältnisse zwischen dem ersten Bereich 34 und dem zweiten Bereich 38 des Innenraums 12, wobei diese Invertierung der Druckverhältnisse durch Umsteuerung des Betriebsmediumflusses durch den Innenraum 12 von der zweiten Betriebsmediumflussrichtung 42 zu der ersten Betriebsmediumflussrichtung 40 erreicht werden kann.

Ist insbesondere das Synchronisierungselement 68 im Wesentlichen wie in der vorliegenden Ausführungsform gezeigt scheibenförmig ausgebildet, so können die axialen Seiten dieser Scheibe im Wesentlichen mit dem ersten 78 und zweiten 80 axialen Druckaufnahmebereich des Synchronisierungselements 68 identifiziert werden, da insbesondere die auf die Kegelabschnitt-Außenform 72 am Synchronisierungselement 68 wirkenden und durch das Betriebsmedium erzeugten Kräfte verglichen mit den durch das Betriebsmedium erzeugten Kräften, welche an den axialen Seiten des Synchronisierungselements 68 wirken, in der hier gezeigten Ausführungsform im Wesentlichen vernachlässigt werden können.

Um die Herstellung einer Drehmomentübertragungsverbindung zwischen dem Koppelelement 44 und dem ausgangsbereichsseitigen Kupplungsbereich 18 verschleißarmer zu gestalten, kann zwischen die Innenverzahnung 70 des Synchronisierungselement 68 und der Gegenverzahnung 86 des Koppelelements 44 eine Wellfeder 82 der Synchronisierungsanordnung 66 eingeführt sein, welche das Koppelelement 44 und das Synchronisierungselement 68 in eine Ruhestellung vorspannt, zum Beispiel eine Mittelstellung der Zähne der Innenverzahnung 70 und der Gegenverzahnung 86 des Koppelelements 44, wobei diese Verzahnungen derart ausgebildet sind, dass ein relatives Drehspiel zwischen dem Synchronisierungselement 68 und dem Koppelelement 44 vorliegt. Aus dieser Ruhestellung können das Koppelelement 44 und das Synchronisierungselement 68 gegeneinander in beide Richtungen verdreht werden, bis eine jeweilige Anschlagstellung erreicht ist, aus welcher eine weitere Drehung aufgrund der Anlagen zwischen den Zähnen der Innenverzahnung 70, den Zähnen 61 der Gegenverzahnung 86 des Koppelelements 44 und der Wellfeder 82 nicht weiter möglich ist.

Die Wellfeder 82 stellt in diesem Fall eine elastische Rückstellkraft in die Ruhestellung gegen eine Relativverdrehung des Synchronisierungselements 68 und des Koppelelements 44 aus der Ruhestellung bereit.

Ist aufgrund einer Differenzdrehzahl zwischen dem Koppelelement 44 und dem Synchronisierungsbereich 74 das Synchronisierungselement 68 gegen die in Umlaufsrichtung wirkende Kraft der Wellfeder 82 gegenüber dem Koppelelement 44 verdreht, so wirkt bei Bewegung des Koppelelements 44 relativ zum Synchronisierungselement 68 in einer bezogen auf die Drehachse 46 axialen Richtung eine dieser Bewegung entgegen gerichtete Reibungskraft (axiale Gegenkraft), welche sich aus den Anlagen zwischen Synchronisierungselement 68 und Wellfeder 82 sowie Wellfeder 82 und Koppelelement 44 bei vorliegender Differenzdrehzahl ergibt. Allgemein betrachtet wird auf Basis eines reibschlüssigen Eingriffs zwischen Verzahnungen zugeordneten Wirkflächen (z.B. Zahnflächen der Innenverzahnung 70 und Zahnflächen der Gegenverzahnung 86 des Koppelelements 44) und der die elastische Rückstellkraft ausübenden elastischen Einrichtung (z.B. der Wellfeder 82) die axiale Gegenkraft zu erzeugt.

Durch Versuche kann eine Soll-Differenzdrehzahl als untere Grenze der Differenzdrehzahl zwischen dem Koppelelement 44 und dem Synchronisierungsbereich 74, welcher in der vorliegenden Ausführungsform drehfest mit dem zweiten Gegeneingriffsbereich 62 ausgebildet ist, ermittelt werden, bei welcher der Übergang des Koppelelements 44 in die Koppelstellung 48 etwa im Hinblick auf einen Verschleiß am Koppelelement 44 und dem zweiten Gegeneingriffsbereich 62 problemlos erfolgen kann.

Soll ein Drehkoppeleingriff zwischen dem zweiten Eingriffsbereich 58 und dem zweiten Gegeneingriffsbereich 62 hergestellt werden, wobei von einem Vorliegen der ersten Betriebsmediumflussrichtung 40, einem Vorliegen einer hohen Differenzdrehzahl (oberhalb der Soll- Differenzdrehzahl) zwischen dem Koppelelement 44 und dem Synchronisierungsbereich 74, und einer Positionierung des Koppelelements 44 in der Entkoppelstellung 50 als einer Ausgangssituation ausgegangen wird, so wird zuerst der Betriebsmittelfluss derart umgesteuert, dass die zweite Betriebsmediumflussrichtung 42 vorliegt und hinreichend hohe Druckabfälle über das Koppelelement 44 und das Synchronisierungselement 68 vorliegen.

Als Reaktion hierauf setzt sich das Koppelelement 44 von der Entkoppelstellung 50 in Richtung der Koppelstellung 48 in Bewegung, während gleichzeitig das Synchronisierungselement 68 durch den Druckabfall daran in reibschlüssigen Synchronisierungseingriff mit dem Synchronisierungsbereich 74 gebracht wird.

Aufgrund der vorliegenden Differenzdrehzahl zwischen dem Koppelelement 44 und dem Synchronisierungsbereich 74 sowie der Drehmitnahmeverbindung zwischen dem Synchronisierungselement 68 und dem Koppelelement 44 wird ein Drehmoment von dem Synchronisierungsbereich 74 auf das Synchronisierungselement 68 und dann weiter auf das Koppelelement 44 übertragen.

Bei der Übertragung des Drehmoments von dem Synchronisierungselement 68 auf das Koppelelement 44 bildet sich eine Relativverdrehung gegen die von der Wellfeder 82 bereitgestellten und in Umfangsrichtung wirkenden Kraft zwischen dem Synchronisierungselement 68 und dem Koppelelement 44 aus. Diese Kraft erzeugt, wie oben beschrieben, eine in Bezug auf die Drehachse 46 wirkende Reibungskraft oder Haltekraft, welche der Bewegung des Koppelelements 44 von der Entkoppelstellung 50 in Richtung der Koppelstellung 48 entgegenwirkt und vorzugsweise diese Bewegung stoppt.

Während die Differenzdrehzahl zwischen dem Koppelelement 44 und dem Synchronisierungsbereich 74 sich auf Basis des reibschlüssigen Synchronisierungseingriff des Synchronisierungselement 68 mit dem Synchronisierungsbereich 74 sowie der Drehmitnahmeverbindung zwischen dem Synchronisierungselement 68 und dem Koppelelement 44 verringert, verringert sich, zumindest ab einer Grenzdifferenzdrehzahl, mit dieser Differenzdrehzahl die von der Wellfeder 82 bereitgestellte und in Umfangsrichtung wirkende Kraft, was wiederum die in Bezug auf die Drehachse 46 axial wirkende Reibungskraft oder Haltekraft reduziert.

Unterschreitet die resultierende Reibungskraft oder Haltekraft die aufgrund des Druckabfalls über das Koppelelement 44 wirkende axiale Kraft, welche dafür geeignet ist die Bewegung des Koppelelements 44 von der Entkoppelstellung 50 in Richtung der Koppelstellung 48 zu bewirken, so setzt sich das Koppelelement 44 in Richtung von der Entkoppelstellung 50 zu der Koppelstellung 48 in Bewegung. Wird eine Vorspanneinrichtung 90 verwendet, so gilt entsprechendes, je nach Relativrichtung der Kräfte, für eine Summe oder Differenz der von der unten beschriebenen Vorspanneinrichtung 90 bereitgestellten in Bezug auf die Drehachse 46 axialen Kraft und der aufgrund des Druckabfalls über das Koppelelement 44 wirkenden axialen Kraft als zu unterschreitender Grenzwert für die resultierende Reibungskraft oder Haltekraft.

Sofern die Reibungskraft die Bewegung des Koppelelements 44 von der Entkoppelstellung 50 in Richtung der Koppelstellung 48 nicht stoppt, so verlangsamt sie diese Bewegung, bis eine Soll-Differenzdrehzahl zwischen dem Koppelelement 44 und dem Synchronisierungsbereich 74 erreicht wird, bevor das Koppelelement 44 die Koppelstellung 48 erreicht. Hierdurch wird eine gewünschte Verlangsamung erreicht.

Über Parameter wie eine Federkonstante und/oder eine Form und/oder eine Oberflächenbeschaffenheit der Wellfeder 82 und/oder eine Form und/oder eine Oberflächenbeschaffenheit der Innenverzahnung 70 und/oder der Gegenverzahnung 86 des Koppelelements 44, usw., kann die axiale Gegenkraft bei der Soll-Differenzdrehzahl auf einen Wert eingestellt werden, welcher im Wesentlichen gleich der Druckkraft ist, welche durch die Wirkung des Druckunterschiedes zwischen dem ersten Bereich 34 und dem zweiten Bereich 38 des Innenraums 12 an dem Koppelelement 44, vorzugsweise an dem Koppelelement 44 in der Entkoppelstellung 50, bei Vorliegen der zweiten Betriebsmediumflussrichtung 42 angreift. Ist die weiter unten beschriebene Vorspanneinrichtung 90 vorhanden, so ist die durch sie ausgeübte Kraft auf das Koppelelement 44 je nach Richtung mit der Druckkraft zu summieren oder von der Druckkraft abzuziehen, und vorzugsweise die axiale Gegenkraft bei der Soll-Differenzdrehzahl auf einen Wert einzustellen, welcher im Wesentlichen gleich dieser errechneten Gesamtkraft, vorzugsweise in der Entkoppelstellung 50 des Koppelelements 44, ist.

Sofern die Reibungskraft die Bewegung des Koppelelements 44 von der Entkoppelstellung 50 in Richtung der Koppelstellung 48 nicht stoppen, sondern nur verlangsamen soll, so werden die oben angesprochenen Parameter derart ausgewählt, dass die gewünschte Verlangsamung (siehe oben) innerhalb der vorgesehenen Betreibsparameter der Kopplungseinrichtung 2 vorliegt.

Ist die Soll-Differenzdrehzahl wie oben dargelegt bestimmt, und wird der Fall betrachtet, dass die zweite Betriebsmediumflussrichtung 42 vorliegt, so wirkt die axiale Gegenkraft der durch die zweite Betriebsmediumflussrichtung 42 verursachten Kraft am Koppelelement 44 entgegen, welche versucht, das Koppelelement 44 in die Koppelstellung 48 zu bringen.

Die axiale Gegenkraft ist vorzugsweise in der Ruhestellung minimal oder verschwindet im Wesentlichen ganz.

Um ein Einfädeln des Axialverzahnungsabschnitts des zweiten Eingriffsbereich 58 in den als Gegenaxialverzahnung ausgebildeten zweiten Gegeneingriffsbereich 62, welche jeweils als Mitnahmeverzahnungen bezeichnet werden können, zu erleichtern, können an mindestens einer dieser Mitnahmeverzahnungen Abfasungen 88 ausgebildet sein, von welchen übersichtshalber nur eine in den Zeichnungen mit Bezugszeichen versehen ist, vergleiche Fig. 3. An der anderen Mitnahmeverzahnung dieser Mitnahmeverzahnungen können korrespondierende Gegenabfasungen 89 als weitere Abfasungen ausgebildet sein. Die Abfasungen 88, gegebenenfalls zusammenwirkend mit den Gegenabfasungen 89, unterstützen insbesondere das Einfädeln des zweiten Eingriffsbereichs 58 in den zweiten Gegeneingriffsbereich 62 bei geringer Differenzdrehzahl, insbesondere unterhalb der Soll-Differenzdrehzahl, zwischen diesen Bereichen.

Liegt eine hohe Differenzdrehzahl, insbesondere oberhalb der Soll-Differenzdrehzahl, vor und wird eine Positionierung des Koppelelements 44 in die Koppelstellung 48 versucht, so bleibt nicht genug Zeit zum Einfädeln des zweiten Eingriffsbereichs 58 in den zweiten Gegeneingriffsbereich 62. Ein aus dem Betriebsmittel 100 ausgebildeter hydrodynamischer Schmierfilm an den Gegenabfasungen 89 wird genutzt um den zweiten Eingriffsbereich 58 des Koppelelements 44 an dem zweiten Gegeneingriffsbereich 62 abfedern zu lassen..

Das Koppelelement 44 wird vorzugsweise axial in Bezug auf die Drehachse 46 entweder zu der Koppelstellung 48 oder zu der Entkoppelstellung 50 durch eine Vorspanneinrichtung 90 vorgespannt. Es kann eine Vorspannung in diejenige Stellung besonders zweckmäßig sein, in welcher sich das Koppelelement üblicherweise befindet. Wird von einem Hybrid-Antrieb ausgegangen, bei welchem die Koppeleinrichtung 4 dazu dienen kann, die nasslaufende Kupplungsanordnung 14 von einem elektrischen Motor abzukoppeln, so ist es bevorzugt, dass die Vorspanneinrichtung 90 das Koppelelement 44 in die Koppelstellung 48 elastisch vorspannt. Die Vorspanneinrichtung 90 kann als eine Tellerfeder ausgebildet sein oder eine Tellerfeder umfassen.

Um zu verhindern, dass Reibungsverluste an der Vorspanneinrichtung 90 entstehen, wird bevorzugt, dass die Vorspanneinrichtung 90 sich in axialer Richtung in Bezug auf die Drehachse 46 einerseits am Koppelelement 44 und andererseits an einem Element der Kupplungseinrichtung 4 abstützt, welches auch im Entkoppelzustand in Drehmitnahmeverbindung mit dem Koppelelement 44 steht. Diese Abstützung kann an der Ausgangsnabe 26 erfolgen, insbesondere an einer Schulter 92 am ersten Gegeneingriffsbereich 60. Die Schulter 92 kann Unterbrechungen aufweisen, sodass unter einer Schulter 92 auch eine Anzahl von Vorsprüngen, von welchen übersichtshalber nur einer in den Zeichnungen mit Bezugszeichen versehen ist, an einer den ersten Gegeneingriffsbereich 60 ausbildenden Verzahnung verstanden werden soll. Alternativ oder zusätzlich kann die Abstützung an dem Element in Drehmitnahmeverbindung mit dem Koppelelement 44 auch an einer Nut oder eine Mehrzahl von Vertiefungen vorliegen.

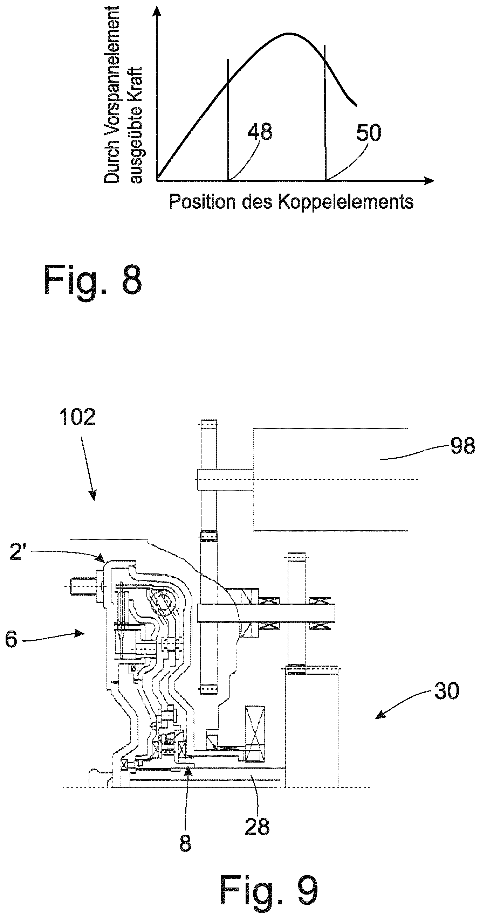

In einer besonders bevorzugten Ausführungsform weist die Vorspanneinrichtung 90 eine nicht-lineare Kraft-Weg-Kennlinie auf, siehe Fig. 8, sodass die Vorspanneinrichtung in einem Wegabschnitt, welcher zwischen der Koppelstellung und der Entkoppelstellung liegt, eine größere Vorspannkraft auf das Koppelelement 44 ausübt, als in der Koppelstellung 48 und der Entkoppelstellung 50. Insbesondere muss der Wegabschnitt nicht den gesamten Weg zwischen der Koppelstellung 48 und der Entkoppelstellung 50 überbrücken. Eine derartige Vorspanneinrichtung 90 kann als eine Tellerfeder mit großer Prägehöhe ausgebildet sein, deren Kraft-Weg-Kennlinie in einem Bereich zwischen der Koppelstellung 48 und der Entkoppelstellung 50 überhöht ist.

Um eine gute Kühlung der nasslaufenden Kupplungsanordnung 14 zu gewährleisten weist die Kupplungseinrichtung 2 zwischen dem ersten Bereich 34 des Innenraums 12 und dem zweiten Bereich 38 des Innenraums 12 mindestens eine Öffnung 94, insbesondere eine Mehrzahl von Öffnungen 94 auf. Die Öffnung/Öffnungen 94 können in dem Koppelelement 44 ausgebildet sein. Sind diese Öffnungen unverschlossen, so kann sich bei gegebenem Betriebsmediumfluss ein Druck zwischen dem ersten Bereich 34 und zweiten Bereich 38 des Innenraums 12 aufbauen, welche geringer ist, als in einem Fall, in welchen die Öffnung/Öffnungen 94 verschlossen wären. Um eine Bewegung des Koppelelements 44 vom Entkoppelzustand in den Koppelzustand zu beschleunigen ist es somit vorteilhaft, die Öffnung/Öffnungen 94 im Entkoppelzustand zu verschließen. Es ist ferner vorteilhaft, die Öffnung/Öffnungen 94 im Koppelzustand zu öffnen, um eine Kühlung der nasslaufenden Kupplungsanordnung 14 durch das Betriebsmedium 100 zu unterstützen, da es, wie weiter unten beschrieben, vorteilhaft ist, dass beim Übergang der Koppeleinrichtung 4 in den Koppelzustand die Kupplungseinrichtung in ihren reibschlüssigen Drehmomentübertragungseingriff gebracht wird, um ein Drehmoment von dem Eingangsbereich 6 zu dem Ausgangsbereich 8 zu übertragen, wobei Abwärme entsteht, die abzuführen ist.

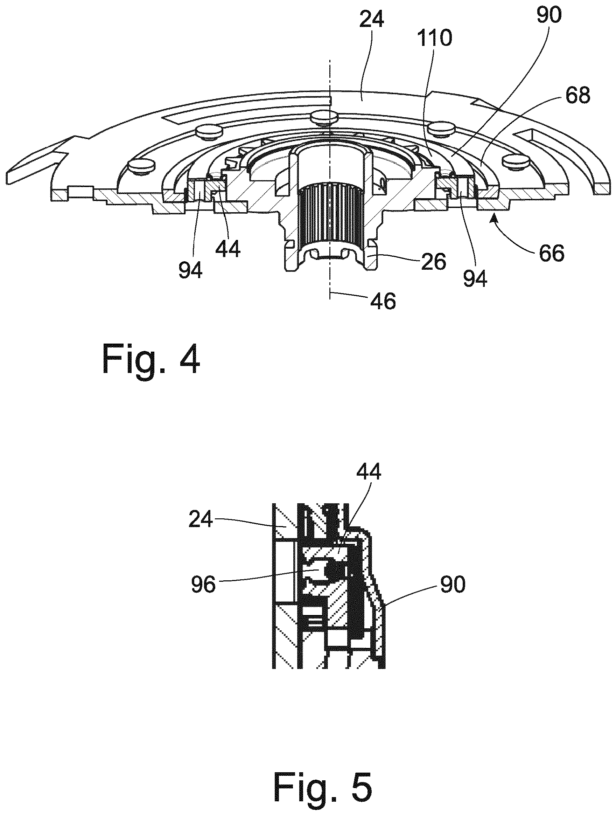

Dieses vorteilhafte Öffnen oder Schließen der Öffnung/Öffnungen 94 kann insbesondere dadurch erreicht werden, dass die Vorspanneinrichtung 90 die Öffnung/Öffnungen 94 im Entkoppelzustand verschließt und im Koppelzustand öffnet. Dies kann dadurch realisiert werden, dass die Vorspanneinrichtung 90 als eine Tellerfeder ausgebildet ist, welche sich im Entkoppelzustand mit einer geschlossenen Fläche in flächige Anlage mit einer die Öffnung/die Öffnungen 94 tragenden Baugruppe befindet, beispielsweise dem Koppelelement 44, wodurch die Öffnung/die Öffnungen 94 verschlossen werden, siehe Fig. 4. Die Öffnung/die Öffnungen 94 werden im Koppelzustand geöffnet, da die Tellerfeder sich beim Übergang der Koppeleinrichtung in den Koppelzustand deformiert, sodass die flächige Anlage der Tellerfeder an der Öffnung/den Öffnungen 94 nicht mehr vorliegt und diese von dem Betriebsmedium 100 geströmt werden können.

Alternativ kann die Öffnung/die Öffnungen 94 oder alternativ andere Öffnungen jeweils als ein Rückschlagventil 96 ausgebildet sein, siehe Fig. 5, welche einen Betriebsmediumfluss in der ersten Betriebsmediumflussrichtung 40 hindurch lässt und in der zweiten Betriebsmediumflussrichtung 42 stoppt oder maximal drosselt. Obwohl in der vorliegenden Ausführungsform nicht gezeigt, können einer oder mehrere Durchgänge, z.B. Durchgänge 104, jeweils zwischen dem ersten Bereich 34 und dem zweiten Bereich 38 als Rückschlagventil ausgebildet sein, wobei diese Rückschlagventile vorzugsweise einen Betriebsmediumfluss in der ersten Betriebsmediumflussrichtung 40 hindurch lassen und in der zweiten Betriebsmediumflussrichtung 42 stoppen oder maximal drosseln.

Bei hoher Differenzdrehzahl des Koppelelements 44 relativ zu den Öffnungen 25 wird eine Strömung des Betriebsmittels 100 durch die Öffnungen 25 vorzugsweise im starken Maße unterdrückt aufgrund von in rascher Folge wiederkehrenden Blockierungen einer direkten Strömung durch die Öffnungen 25, wobei die Blockierungen durch um die Achse 46 rotierende Zähne 61 des zweiten Gegeneingriffsbereichs 62 verursacht werden, wenn sie die direkte Strömung entlang eines Druckgefälles unterbrechen.

Bei der Kupplungseinrichtung 2 wird, wie bereits angesprochen, vorzugsweise die nasslaufende Kupplungsanordnung 14 durch Umsteuerung des Betriebsmediumflusses betätigt, wobei vorzugsweise beim Übergang von der ersten Betriebsmediumflussrichtung 40 zu der zweiten Betriebsmediumflussrichtung 42 ein reibschlüssiger Drehmomentübertragungseingriff zwischen dem eingangsbereichsseitigen Kupplungsbereich 16 und dem ausgangsbereichsseitigen Kupplungsbereich 18 hergestellt wird und beim Übergang von der zweiten Betriebsmediumflussrichtung zu der ersten Betriebsmediumflussrichtung 40 dieser Drehmomentübertragungseingriff unterbrochen wird. Eine derartige Kupplungseinrichtung wird auch als ein Zweileitungssystem bezeichnet.

Um besonders große Drehmomente durch die nasslaufende Kupplungsanordnung 14 zu übertragen kann es zweckmäßig sein, deren Betätigung nicht an den Betriebsmediumfluss zu koppeln sondern mittels eines zusätzlichen Aktuators zu regeln/zu steuern, wie beispielsweise eines Nehmerzylinders, welcher unabhängig von dem Betriebsmediumfluss durch den Innenraum 12 betätigbar ist. In einem solchen System muss entsprechend neben der ersten Anschlussanordnung 32 und der zweiten Anschlussanordnung 36 eine dritte Anschlussanordnung für den zugeordneten Nehmerzylinder vorliegen und entsprechend werden solche Systeme auch als Dreileitungssysteme bezeichnet.

Die Kupplungseinrichtung 2 kann über eine Seitenscheibe 106 abgeschlossen werden, welche über Nieten 108 an der Nabenscheibe 24 befestigt sein kann. Zwischen das Koppelelement 44 und die Seitenscheibe 106 kann eine Unterlegscheibe 110 mit Anschlagnocken 112 eingebracht werden, um einen Endanschlag für das das Koppelelement 44 an den zu definieren. Die optionale Unterlegscheibe 110 ist in der schematischen Ansicht der Fig.1 zur Wahrung der Übersicht nicht gezeigt, die Kupplungseinrichtung 2 der Fig.1 weist jedoch, wie der Fig. 3 zu entnehmen ist, die optionale Unterlegscheibe 110 auf.

Die oben beschriebene Kupplungseinrichtung kann in einen Kraftfahrzeug-Antriebsstrang 102 eingebaut sein, bei welchem eine vorzugsweise brennkraftmotorische erste Antriebseinheit am Eingangsbereich 6 eine Antriebsleistung einleitet und an deren Ausgangsbereich 8 die vorzugsweise ein Getriebe aufweisende Abtriebsanordnung 30 zur Aufnahme der Antriebsleistung angeschlossen ist.

Ferner kann in dem Kraftfahrzeug-Antriebsstrang 102 eine zweite Antriebseinheit 98 vorgesehen sein, welche mit einer Eingangsseite der Abtriebsanordnung 30 in Drehmomentübertragungsverbindung gebracht werden kann oder in Drehmomentübertragungsverbindung steht. Besonders zweckmäßig kann die Drehmomentübertragung der zweiten Antriebseinheit 98 in die Abtriebsanordnung 30 ausgangsbereichsseitig bezüglich der Kupplungseinrichtung 2 stattfinden.

Zu beachten ist, dass der in Fig. 9 gezeigte Kraftfahrzeug-Antriebsstrang eine erfindungsgemäße Kupplungseinrichtung 2' aufweist, welche nicht alle Merkmale der in den Figuren 1 bis 7 gezeigten Kupplungseinrichtung 2 zeigt. So weist die Kupplungseinrichtung 2' kein Vorspannelement 90 auf. Die Kupplungseinrichtung 2' kann jedoch durch eine Kupplungseinrichtung 2 ersetzt werden.

Aus der Beschreibung der Kupplungseinrichtung 2 wird ersichtlich, dass die Koppeleinrichtung 4 in dem Entkoppelzustand eine Drehmomentübertragungsverbindung zwischen der zweiten Antriebseinheit 98 und dem ausgangbereichsseitigen Kupplungsbereich 18 unterbricht.

Insbesondere auf Basis der Einleitung ist es für den Fachmann ersichtlich, dass das Koppelelement nicht dauerhaft drehfest mit mindestens einem aus dem ausgangsbereichsseitigen Kupplungsbereich oder dem Ausgangsbereich gekoppelt sein muss, sondern beispielsweise durch eine axiale Verschiebung mit diesen koppelbar ist, wobei ähnliche Mittel zur Kopplung verwendet werden können, wie sie in der detaillierten Beschreibung für die Kopplung des Koppelelements 44 aufgeführt sind. Insbesondere kann dann für jede Kopplung, die das Koppelelement vornehmen kann, eine gesonderte Synchronisierungseinrichtung vorgesehen werden.

Ebenso muss das Synchronisierungselement nicht drehfest mit dem Koppelelement verbunden sein, sondern es kann in eine reibschlüssigen
Verbindung mit dem Koppelelement, welche möglicherweise auch Schlupf aufweisen kann, gebracht werden.

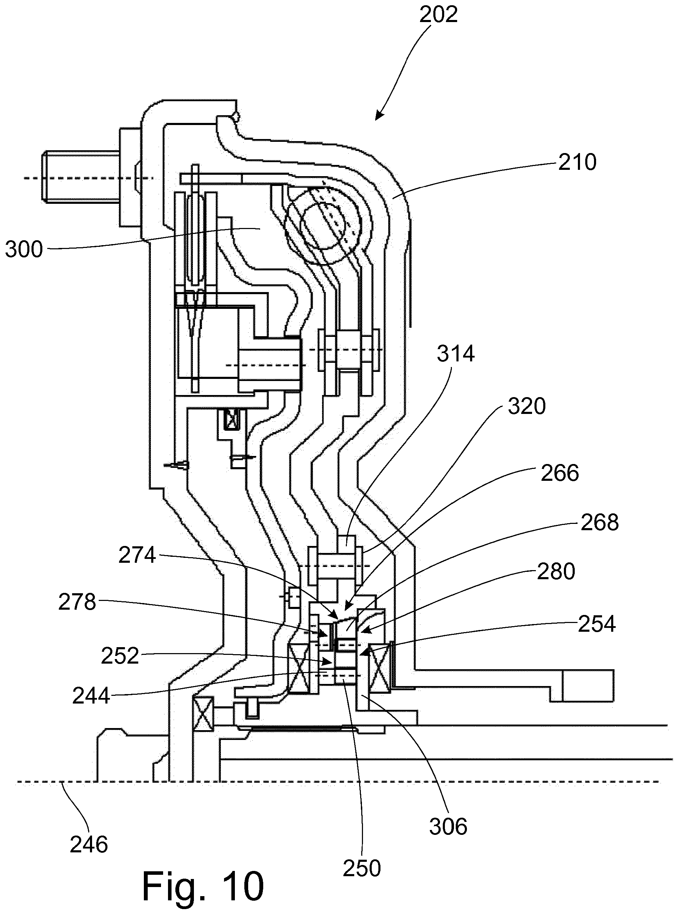

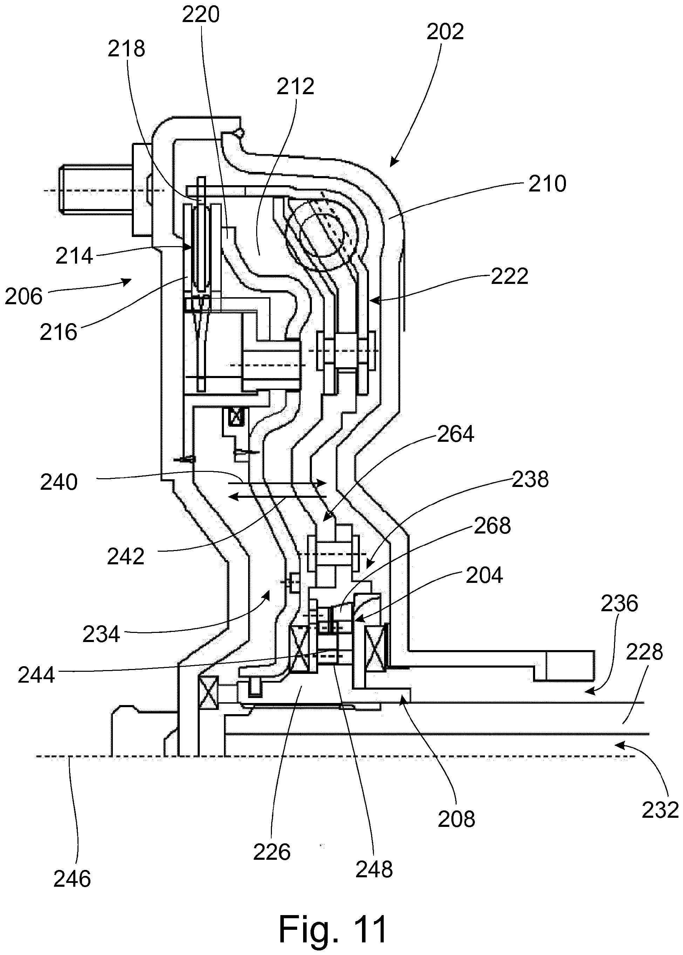

Die Fig. 10-15 zeigen eine zweite Ausführungsform einer Kupplungseinrichtung 202, welche sich im Wesentlichen durch den Aufbau einer Koppeleinrichtung 204 von der Kupplungseinrichtung 2 unterscheidet. Ferner werden gewisse optionale Merkmale der Kupplungseinrichtung 2 in der Kupplungseinrichtung 202 nicht verwendet:
- ein Ausgangselement 264 einer Torsionsschwingungsdämpferanordnung 222 ist nicht als Nabenscheibe ausgebildet;
- eine Vorspanneinrichtung und somit eine entsprechende Abstützung, wie beispielsweise eine Schulter, findet keine Verwendung;
- ein Koppelelement 244 der Kupplungseinrichtung 202 umfasst keine speziellen Öffnungen oder Rückschlagventile;
- es wird keine Wellfeder verwendet;
- es wird keine Unterlegscheibe mit Anschlagsnocken verwendet, welche der Unterlegscheibe 110 entsprechen würde; und
- die Seitenscheibe 306 wird nicht mittels Nieten festgemacht.

Entsprechend der Lehre der ersten Ausführungsform ist der Fachmann jedoch in der Lage, um die entsprechenden Vorteile zu erreichen, die oben aufgeführten optionalen Merkmale auch bei der zweiten Ausführungsform einzeln oder in Kombination zu verwenden.

Elemente, Teile, Anordnungen, Positionen und so weiter, welche denen der ersten Ausführungsform entsprechen, sind in den Figuren 10 bis 15 und der Beschreibung mit um 200 erhöhten Bezugszeichen, verglichen mit der ersten Ausführungsform, versehen und weisen, sofern nicht explizit anders dargestellt, dieselben oder entsprechende Eigenschaften und Merkmale wie diejenigen Elemente, Teile, Anordnungen, Positionen und so weiter, der ersten Ausführungsform auf, welche ein um 200 verringertes Bezugszeichen, verglichen mit der zweiten Ausführungsform, aufweisen. Entsprechend wird an dieser Stelle explizit auf die entsprechende Beschreibung in der ersten Ausführungsform verwiesen.

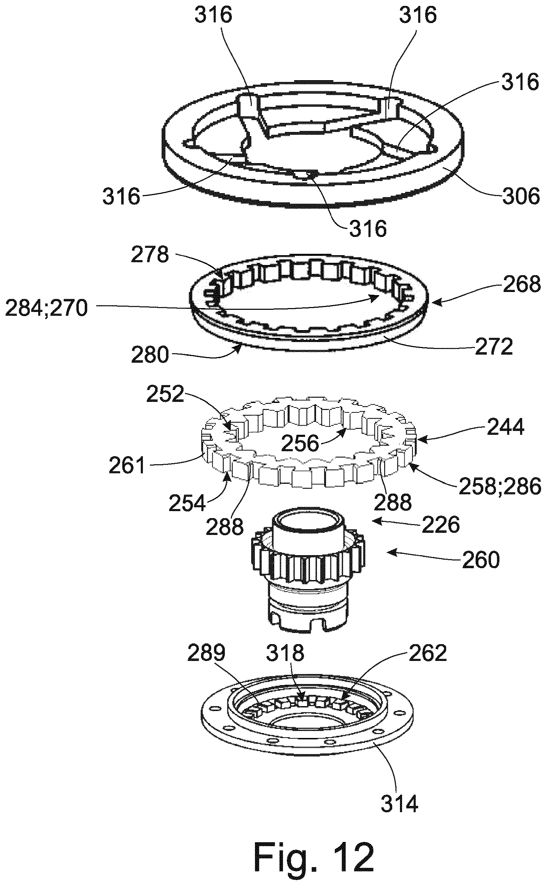

Während in der ersten Ausführungsform der zweite Gegeneingriffsbereich 62 einstückig mit dem als Nabenscheibe 24 ausgebildeten Ausgangselement 64 der Torsionsschwingungsdämpferanordnung 22 ausführt ist, ist der zweite Gegeneingriffsbereich 262 der zweiten Ausführungsform an einem Übertragungselement 314 ausgebildet, welches mit einem Ausgangselement 264 der Torsionsschwingungsdämpferanordnung 222 über Verbindungselemente 320 oder eine andere geeignete Verbindung gekoppelt ist. Alternativ kann der zweite Gegeneingriffsbereich 262 einstückig mit dem Ausgangselement 264 der Torsionsschwingungsdämpferanordnung 222, beispielsweise an einer Nabenscheibe, ausgebildet sein. Zu beachten ist, dass zur Darstellung aller notwendigen Details die einzelnen Elemente in Fig. 12 nicht im gleichen Maßstab dargestellt worden sind.

Der zweite Gegeneingriffsbereich 262 ist vorzugsweise als eine Innenverzahnung 318 ausgebildet, welche in den vorzugsweise als Außenverzahnung ausgebildeten zweiten Eingriffsbereich 260 in einem Koppelzustand der Koppeleinrichtung 204 eingreift. Diese Außenverzahnung des zweiten Eingriffsbereichs 260 bildet auch die Gegenverzahnung 286 des Koppelelements 244 aus. Die Innenverzahnung 318 greift vorzugsweise nur in radialer Richtung in den als Außenverzahnung ausgebildeten zweiten Eingriffsbereich 260 ein.

Die Seitenscheibe 306 kann in das Übertragungselement 314 mittels Verpressung oder Verschweißung eingebracht werden, sodass keine Nieten zur Verbindung herangezogen werden müssen.

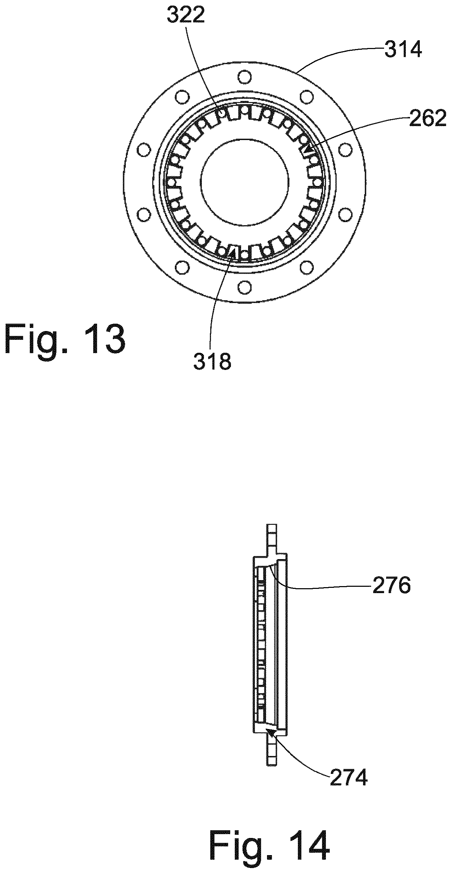

Um eine Betriebsmediumströmung durch die Koppeleinrichtung 204 zu unterstützen, kann die Seitenscheibe 306 mindestens einen Betriebsmediumkanal 316 umfassen. Diese Betriebsmediumströmung wird ferner durch Öffnungen 322 in dem Übertragungselement 314 unterstützt, wobei wiederum zur Wahrung der Übersicht in Fig. 13 nur eine einzige derartige Öffnung 322 mit einem Bezugszeichen versehen ist. Diese Öffnungen 322, Betriebsmittelkanäle 316 sowie Zwischenräume zwischen Eingriffsbereichen und zugeordneten Gegeneingriffsbereichen und/oder Zwischenräume in der Synchronisierungsanordnung 266 können Durchgänge 304 zwischen dem ersten Bereich 234 und dem zweiten Bereich 238 des Innenraums 212 ausbilden.

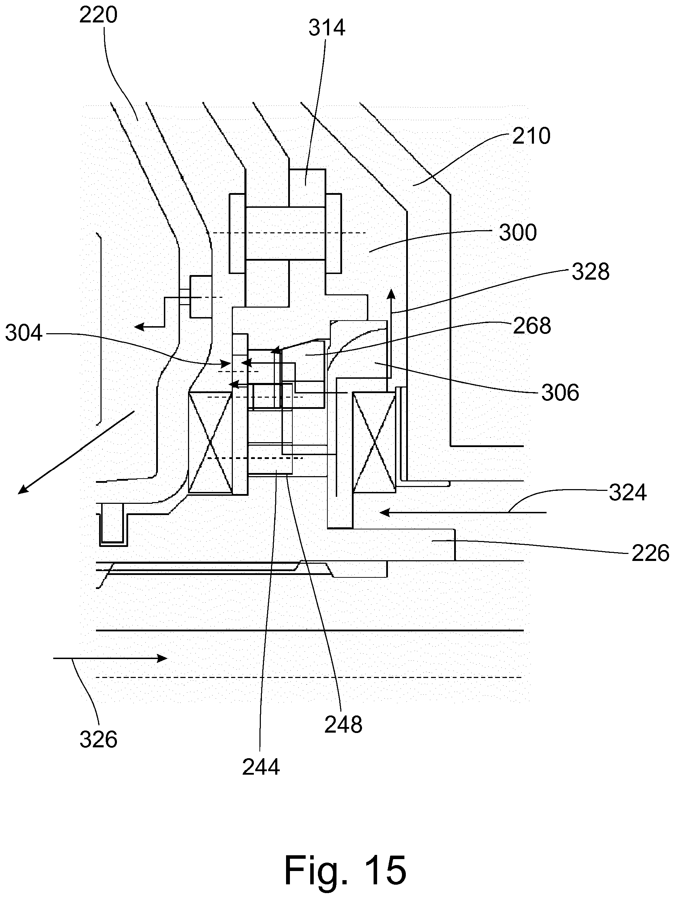

In Fig. 15 sind durch Pfeile Flussrichtungen des Betriebsmediums mit einer Betriebsmediumzulaufrichtung 324, Betriebsmediumrücklaufrichtung 326 sowie einer Betriebsmediumkühlstromrichtung 328 schematisch bei Vorliegen der zweiten Betriebsmediumflussrichtung 242 angegeben.

Die Kupplungseinrichtung 202 kann anstelle der Kupplungseinrichtung 2 in einem bereits beschriebenen Kraftfahrzeug-Antriebsstrang verwendet werden, sodass auf die zugehörige Abtriebsanordnung, erste oder zweite Antriebseinheit nicht näher eingegangen wird.

Anzumerken ist, dass eine erfindungsgemäße Kupplungseinrichtung bereitgestellt werden kann, indem eine Kupplungseinrichtung wie aus der DE 10 2016 201 869 A1 bekannt um eine in der vorhergehenden Offenbarung beschriebene Koppeleinrichtung 4 ergänzt wird, die in den Drehmomentübertragungspfad zwischen der darin gezeigten Torsionsschwingungsdämpfernabe (Bezugszeichen 56 in der DE 10 2016 201 869 A1) und dem darin gezeigten Ausgang (Bezugszeichen 52 der DE 10 2016 201 869 A1) des Torsionsschwingungsdämpfers eingefügt wird.

### Bezugszeichen

- 2: Kupplungseinrichtung
- 2': Kupplungseinrichtung
- 4: Koppeleinrichtung
- 6: Eingangsbereich
- 8: Ausgangsbereich
- 10: Kupplungsgehäuse
- 12: Innenraum
- 14: nasslaufende Kupplungsanordnung
- 16: eingangsbereichseitiger Kupplungsbereich
- 18: ausgangsbereichsseitiger Kupplungsbereich
- 20: Kolben
- 22: Torsionsschwingungsdämpferanordnung
- 24: Nabenscheibe
- 25: Öffnungen der Nabenscheibe
- 26: Ausgangsnabe
- 28: Drehwelle
- 30: Abtriebsanordnung
- 32: erste Anschlussanordnung
- 34: erster Bereich des Innenraums
- 36: zweite Anschlussanordnung
- 38: zweiter Bereich des Innenraums
- 40: erste Betriebsmediumflussrichtung
- 42: zweite Betriebsmediumflussrichtung;
- 44: Koppelelement
- 46: Drehachse der Kupplungseinrichtung
- 48: Koppelstellung
- 50: Entkoppelstellung
- 52: erster axialer Druckaufnahmebereich des Koppelelements
- 53: Ebene des Koppelelements
- 54: zweiter axialer Druckaufnahmebereich des Koppelelements
- 56: erster Eingriffsbereich
- 58: zweiter Eingriffsbereich
- 59: Abschnitte von Zähnen
- 60: erster Gegeneingriffsbereich
- 61: Zähne
- 62: zweiter Gegeneingriffsbereich
- 64: Ausgangselement der Torsionsschwingungsdämpferanordnung
- 66: Synchronisierungsanordnung
- 68: Synchronisierungselement
- 70: Innenverzahnung des Synchronisierungselements
- 72: Kegelabschnitt-Außenform
- 74: Synchronisierungsbereich
- 76: Hohlkegelabschnitt-Innenform
- 78: erster axialer Druckaufnahmebereich des Synchronisierungselements
- 80: zweiter axialer Druckaufnahmebereich des Synchronisierungselements
- 82: Wellfeder
- 84: Verzahnung des Synchronisierungselements
- 86: Gegenverzahnung des Koppelelements
- 88: Abfasung
- 89: Gegenabfasung
- 90: Vorspanneinrichtung
- 92: Schulter
- 94: Öffnung
- 96: Rückschlagventil
- 98: zweite Antriebseinheit
- 100: Betriebsmedium
- 102: Kraftfahrzeug-Antriebsstrang
- 104: Durchgänge
- 106: Seitenscheibe
- 108: Niete
- 110: Unterlegscheibe
- 112: Anschlagnocken
- 202: Kupplungseinrichtung
- 204: Koppeleinrichtung
- 206: Eingangsbereich
- 208: Ausgangsbereich
- 210: Kupplungsgehäuse
- 212: Innenraum
- 214: nasslaufende Kupplungsanordnung
- 216: eingangsbereichseitiger Kupplungsbereich
- 218: ausgangsbereichsseitiger Kupplungsbereich
- 220: Kolben
- 222: Torsionsschwingungsdämpferanordnung
- 226: Ausgangsnabe
- 228: Drehwelle
- 232: erste Anschlussanordnung
- 234: erster Bereich des Innenraums
- 236: zweite Anschlussanordnung
- 238: zweiter Bereich des Innenraums
- 240: erste Betriebsmediumflussrichtung
- 242: zweite Betriebsmediumflussrichtung;
- 244: Koppelelement
- 246: Drehachse der Kupplungseinrichtung
- 248: Koppelstellung
- 250: Entkoppelstellung
- 252: erster axialer Druckaufnahmebereich des Koppelelements
- 254: zweiter axialer Druckaufnahmebereich des Koppelelements
- 256: erster Eingriffsbereich
- 258: zweiter Eingriffsbereich
- 260: erster Gegeneingriffsbereich
- 261: Zähne
- 262: zweiter Gegeneingriffsbereich
- 264: Ausgangselement der Torsionsschwingungsdämpferanordnung
- 266: Synchronisierungsanordnung
- 268: Synchronisierungselement
- 270: Innenverzahnung des Synchronisierungselements
- 272: Kegelabschnitt-Außenform
- 274: Synchronisierungsbereich
- 276: Hohlkegelabschnitt-Innenform
- 278: erster axialer Druckaufnahmebereich des Synchronisierungselements
- 280: zweiter axialer Druckaufnahmebereich des Synchronisierungselements
- 284: Verzahnung des Synchronisierungselements
- 286: Gegenverzahnung des Koppelelements
- 288: Abfasung
- 289: Gegenabfasung
- 300: Betriebsmedium
- 304: Durchgänge
- 306: Seitenscheibe
- 314: Übertragungselement
- 316: Betriebsmediumkanal
- 318: Innenverzahnung des zweiten Gegeneingriffsbereichs
- 320: Verbindungselement
- 322: Öffnungen im Übertragungselement
- 324: Betriebsmediumzulaufrichtung
- 326: Betriebsmediumrücklaufrichtung
- 328: Betriebsmediumkühlstromrichtung

## Patentansprüche

1. Kupplungseinrichtung (2; 2'; 202) zur Anordnung in einem Kraftfahrzeug-Antriebsstrang (102) zwischen einer Antriebseinheit und einer Abtriebsanordnung (30);
umfassend einen der Antriebseinheit zugeordneten Eingangsbereich (6; 206) und wenigstens einen der Abtriebsanordnung (30) zugeordneten Ausgangsbereich (8; 208);
wobei ein am Eingangsbereich (6; 206) in die Kupplungseinrichtung (2; 2'; 202) eingeleitetes Antriebsdrehmoment über wenigstens eine in einem Innenraum (12; 212) eines Kupplungsgehäuses (10; 210) der Kupplungseinrichtung (2; 2'; 202) angeordnete nasslaufende Kupplungsanordnung (14; 214) zum Ausgangsbereich (8; 208) übertragbar ist, die wenigstens einen eingangsbereichseitigen Kupplungsbereich (16; 216) und wenigstens einen mit dem eingangsbereichseitigen Kupplungsbereich (16; 216) in reibschlüssigen Drehmomentübertragungseingriff bringbaren ausgangsbereichsseitigen Kupplungsbereich (18; 218) aufweist;
und wobei zwischen dem ausgangsbereichsseitigen Kupplungsbereich (18; 218) der nasslaufenden Kupplungsanordnung (14; 214) und dem Ausgangsbereich (8; 208) eine Koppeleinrichtung (4; 204) vorgesehen ist, die in einem Koppelzustand eine Drehmomentübertragungsverbindung zwischen dem ausgangsbereichsseitigen Kupplungsbereich (18; 218) und dem Ausgangsbereich (8; 208) für die Übertragung des Antriebsdrehmoments zum Ausgangsbereich (8; 208) herstellt und die in einem Entkoppelzustand den Ausgangsbereich (8; 208) von dem ausgangsbereichsseitigen Kupplungsbereich (18; 218) abkoppelt unter Unterbrechung der Drehmomentübertragungsverbindung;
**dadurch gekennzeichnet,**
**dass** ein Betriebsmedium (100; 300) für den Nasslaufbetrieb der Kupplungsanordnung (14; 214) in das Kupplungsgehäuse wahlweise über eine erste Anschlussanordnung (32; 232) in den Innenraum (12; 212) zuführbar und über eine zweite Anschlussanordnung (36; 236) aus dem Innenraum (12; 212) abführbar ist zur Realisierung einer ersten Betriebsmediumflussrichtung (40; 240) oder über die zweite Anschlussanordnung (36; 236) in den Innenraum (12; 212) zuführbar und über die erste Anschlussanordnung (32; 232) aus dem Innenraum (12; 212) abführbar ist zur Realisierung einer zweiten Betriebsmediumflussrichtung (42; 242);
und **dass** die Koppeleinrichtung (4; 204) unter Vermittlung des Betriebsmediums (100; 300) zwischen dem Koppelzustand und dem Entkoppelzustand überführbar ist durch Umsteuerung des Betriebsmediumflusses durch den Innenraum (12; 212) zwischen der ersten (40; 240) und der zweiten Betriebsmediumflussrichtung (42; 242).

2. Kupplungseinrichtung (2; 2'; 202) nach Anspruch 1, **dadurch gekennzeichnet, dass** die Koppeleinrichtung (4; 204) ein bezogen auf eine Drehachse (46; 246) der Kupplungseinrichtung (2; 2'; 202) axial zwischen einer dem Koppelzustand zugeordneten Koppelstellung (48; 248) und einer dem Entkoppelzustand zugeordneten Entkoppelstellung (50; 250) verschiebbares Koppelelement (44; 244) umfasst, welches in der Koppelstellung (48; 248) mit dem Ausgangsbereich (8; 208) und dem ausgangsbereichsseitigen Kupplungsbereich (18; 218) in Drehmitnahmeverbindung steht und in der Entkoppelstellung (50; 250) von zumindest einem von dem Ausgangsbereich (8; 208) und dem ausgangsbereichsseitigen Kupplungsbereich (18; 218) abgekoppelt ist unter Unterbrechung der Drehmitnahmeverbindung.

3. Kupplungseinrichtung (2; 2'; 202) nach Anspruch 2, **dadurch gekennzeichnet, dass** das Koppelelement einen ersten axialen Druckaufnahmebereich (52; 252) und einen entgegengesetzten zweiten axialen Druckaufnahmebereich (54; 254) aufweist und in Abhängigkeit von einer Druckdifferenz von an diesen Druckaufnahmebereichen wirkenden Betriebsmediumdrücken axial von der Koppelstellung (48; 248) in Richtung zur Entkoppelstellung (50; 250) und von der Entkoppelstellung (50; 250) in Richtung zur Koppelstellung (48; 248) verstellbar ist.

4. Kupplungseinrichtung (2; 2'; 202) nach Anspruch 2 oder 3, **dadurch gekennzeichnet, dass** das Koppelelement einen dem Ausgangsbereich (8; 208) zugeordneten ersten Eingriffsbereich (56; 256) und einen dem ausgangsbereichsseitigen Kupplungsbereich (18; 218) zugeordneten zweiten Eingriffsbereich (58; 258) aufweist, dass an dem Ausgangsbereich (8; 208) ein dem ersten Eingriffsbereich (56; 256) zugeordneter erster Gegeneingriffsbereich (60; 260) drehfest angebunden ist, dass an dem ausgangsbereichsseitigen Kupplungsbereich (18; 218) ein dem zweiten Eingriffsbereich (58; 258) zugeordneter zweiter Gegeneingriffsbereich (62; 262) drehfest angebunden ist, wobei zwischen dem ersten Eingriffsbereich (56; 256) und dem ersten Gegeneingriffsbereich (60; 260) ein reibschlüssiger oder formschlüssiger Drehkopplungseingriff besteht oder durch axiale Verstellung des Koppelelements von der Entkoppelstellung (50; 250) in die Koppelstellung (48; 248) herstellbar ist und zwischen dem zweiten Eingriffsbereich (58; 258) und dem zweiten Gegeneingriffsbereich (62; 262) ein reibschlüssiger oder formschlüssiger Drehkopplungseingriff besteht oder durch axiale Verstellung des Koppelelements von der Entkoppelstellung (50; 250) in die Koppelstellung (48; 248) herstellbar ist.

5. Kupplungseinrichtung (2; 2'; 202) nach Anspruch 4, **dadurch gekennzeichnet, dass** von dem von dem ersten Eingriffsbereich (56; 256) und dem ersten Gegeneingriffsbereich (60; 260) gebildeten Eingriffspaar und dem von dem zweiten Eingriffsbereich (58; 258) und dem zweiten Gegeneingriffsbereich (62; 262) gebildeten Eingriffspaar ein Eingriffspaar in ständigem Drehkopplungseingriff steht und das andere Eingriffspaar wahlweise durch axiale Verstellung des Koppelelements von der Entkoppelstellung (50; 250) in die Koppelstellung (48; 248) in den Drehkoppeleingriff bringbar ist.

6. Kupplungseinrichtung (2; 2'; 202) nach einem der Ansprüche 2 bis 5, **dadurch gekennzeichnet, dass** die Koppeleinrichtung (4; 204) mit einer Synchronisierungsanordnung (66; 266) ausgeführt ist, welche wenigstens ein mit dem Koppelelement in Drehmomentübertragungsverbindung stehendes oder bringbares, vorzugsweise relativ zu diesem axial verschiebbares Synchronisierungselement (68; 268) umfasst, welches im Zuge der Überführung der Koppeleinrichtung (4; 204) aus dem Entkoppelzustand in den Koppelzustand mit einem zugeordneten ausgangsbereichsseitigen oder kupplungseinrichtungsseitigen Synchronisierungsbereich (74; 274) in reibschlüssigen Synchronisierungseingriff bringbar ist, um eine Differenzdrehzahl zwischen dem Koppelelement und wenigstens einem von der Ausgangsseite und dem ausgangsbereichsseitigen Kupplungsbereich (18; 218) zu reduzieren und so die Positionierung des Koppelelements in der Koppelstellung (48; 248) zur Herstellung des Koppelzustands zu ermöglichen oder zu erleichtern.

7. Kupplungseinrichtung (2; 2'; 202) nach Anspruch 6, **dadurch gekennzeichnet, dass** zumindest eines von dem Synchronisationsbereich (74; 274) und dem Synchronisationselement (68; 268) zumindest abschnittsweise eine Kegelabschnitt-Außenform (72; 272) und das andere von dem Synchronisationsbereich (74; 274) und dem Synchronisationselement (68; 268) zumindest abschnittsweise eine Hohlkegelabschnitt-Innenform (76; 276) aufweist.

8. Kupplungseinrichtung (2; 2'; 202) nach Anspruch 6 oder 7, **dadurch gekennzeichnet, dass** das Synchronisierungselement (68; 268) einen ersten axialen Druckaufnahmebereich (78; 278) und einen entgegengesetzten zweiten axialen Druckaufnahmebereich (80; 280) aufweist und vermittels einer Druckdifferenz von an diesen Druckaufnahmebereichen wirkenden Betriebsmediumdrücken axial gegen den zugeordneten Synchronisierungsbereich (74; 274) verschiebbar ist, um den reibschlüssigen Synchronisierungseingriff mit diesem herzustellen.

9. Kupplungseinrichtung (2) nach einem der Ansprüche 6 bis 8, **dadurch gekennzeichnet, dass** die Synchronisationsanordnung (66) dafür eingerichtet ist, eine entgegen einer axialen Relativbewegung zwischen dem Synchronisationselement (68) und dem Koppelelement wirkende axiale Gegenkraft auszuüben, um einer Positionierung des Koppelelements in der Koppelstellung (48) vor Reduzierung der Differenzdrehzahl auf eine Soll-Differenzdrehzahl entgegenzuwirken.

10. Kupplungseinrichtung (2) nach Anspruch 9, **dadurch gekennzeichnet, dass** das Synchronisierungselement (68) eine Verzahnung (84) und das Koppelelement eine Gegenverzahnung (86, 58) aufweist, mittels der das Synchronisierungselement (68) und das Koppelelement mit relativem Drehspiel miteinander gekoppelt sind, wobei das Synchronisierungselement (68) und das Koppelelement entgegen einer elastischen Rückstellkraft aus einer Ruhestellung relativ zueinander in Richtung einer Anschlagstellung verdrehbar sind, um auf Basis eines reibschlüssigen Eingriffs zwischen den Verzahnungen zugeordneten Wirkflächen die axiale Gegenkraft zu erzeugen, wobei die Wirkflächen vorzugsweise Zahnflächen der Verzahnungen oder/und Oberflächenabschnitte einer zwischen den der Verzahnung (84) und der Gegenverzahnung (86, 58) angeordneten, die elastische Rückstellkraft ausübenden, vorzugsweise von wenigstens einer Wellfeder (82) gebildeten elastischen Einrichtung umfassen.

11. Kupplungseinrichtung (2; 202) nach Anspruch 4 oder nach Anspruch 4 und einem der Ansprüche 5 bis 10, **dadurch gekennzeichnet, dass** der erste Eingriffsbereich (56; 256) und der erste Gegeneingriffsbereich (60; 260) oder/und der zweite Eingriffsbereich (58; 258) und der zweite Gegeneingriffsbereich (62; 262) des Koppelelements in gegenseitigem Eingriff stehende oder bringbare Mitnahmeverzahnungen aufweisen, von denen vorzugsweise wenigstens eine mit Abfasungen (88; 288) ausgeführt ist, welche ein Ineingriffbringen der betreffenden Mitnahmeverzahnungen des jeweiligen Eingriffsbereich und Gegeneingriffsbereich mechanisch unterstützen oder/und unter Mitwirkung des Betriebsmediums (100; 300) einer Positionierung des Koppelelements in der Koppelstellung (48; 248) vor Reduzierung der Differenzdrehzahl auf eine Soll-Differenzdrehzahl entgegenwirken.

12. Kupplungseinrichtung (2) nach einem der Ansprüche 2 bis 11, **dadurch gekennzeichnet, dass** die Koppeleinrichtung (4) eine das Koppelelement axial in Richtung zu der Entkoppelstellung (50) oder - vorzugsweise - in Richtung zu der Koppelstellung (48) elastisch vorspannende Vorspanneinrichtung (90) aufweist, die gewünschtenfalls wenigstens eine Tellerfeder umfasst.

13. Kupplungseinrichtung (2) nach Anspruch 12, **dadurch gekennzeichnet, dass** das die Vorspanneinrichtung (90) an einem Element der Kupplungseinrichtung (2) axial abstützt ist, welches auch in dem Entkoppelzustand in Drehmitnahmeverbindung mit dem Koppelelement steht.

14. Kupplungseinrichtung (2) nach Anspruch 12 oder 13, **dadurch gekennzeichnet, dass** die Vorspanneinrichtung (90) eine nicht-lineare Kraft-Weg-Kennlinie derart aufweist, dass die Vorspanneinrichtung (90) auf das Koppelelement in einem Wegabschnitt zwischen der Koppelstellung (48) und der Entkoppelstellung (50) eine größere Vorspannkraft auf das Koppelelement ausübt als in der Koppelstellung (48) und der Entkoppelstellung (50).

15. Kupplungseinrichtung (2) nach einem der Ansprüche 12 bis 14, **dadurch gekennzeichnet, dass** die Vorspanneinrichtung (90) dafür eingerichtet ist, wenigstens eine von dem Betriebsmedium zumindest zeitweise durchströmte, auf das Koppelelement wirkende Betriebsmediumdrücke auf Grundlage des Betriebsmediumflusses beeinflussende Öffnung (94) im Koppelzustand zu öffnen und im Entkoppelzustand zu verschließen.

16. Kupplungseinrichtung (2) nach einem der Ansprüche 1 bis 14, **dadurch gekennzeichnet, dass** wenigstens eine von dem Betriebsmedium (100) zumindest zeitweise durchströmte, auf das Koppelelement wirkende Betriebsmediumdrücke auf Grundlage des Betriebsmediumflusses beeinflussende Öffnung (94) als Rückschlagventil (96) ausgeführt ist, welches Betriebsmedium (100) im Falle einer in den Koppelzustand überführenden Betriebsmediumflussrichtung Betriebsmedium (100) maximal durchlässt und im Falle einer in den Entkoppelzustand überführenden Betriebsmediumflussrichtung kein Betriebsmedium (100) durchlässt oder dieses maximal drosselt.

17. Kupplungseinrichtung (2; 2'; 202) nach einem der Ansprüche 1 bis 16, **dadurch gekennzeichnet, dass** die nasslaufende Kupplungsanordnung (14; 214) unter Vermittlung des Betriebsmediums (100; 300) durch Umsteuerung des Betriebsmediumflusses durch den Innenraum (12; 212) zwischen der ersten (40; 240) und der zweiten Betriebsmediumflussrichtung (42; 242) betätigbar ist.

18. Kupplungseinrichtung (2; 2'; 202) nach einem der Ansprüche 1 bis 16, **dadurch gekennzeichnet, dass** die nasslaufende Kupplungsanordnung (14; 214) unabhängig von dem Betriebsmediumflusses durch den Innenraum (12; 212) betätigbar ist, vorzugsweise mittels wenigstens einem dieser zugeordneten Nehmerzylinder, dem zur Betätigung der Kupplungsanordnung (14; 214) Druckmedium unabhängig von dem Betriebsmediumflusses durch den Innenraum (12; 212) zuführbar ist.

19. Kupplungseinrichtung (2; 2'; 202) nach einem der vorhergehenden Ansprüche, **gekennzeichnet durch** eine Torsionsschwingungsdämpferanordnung (22; 222), über die eine Drehmomentübertragungsverbindung zwischen dem ausgangsbereichsseitigen Kupplungsbereich (18; 218) und der Koppeleinrichtung (4; 204) hergestellt oder herstellbar ist.

20. Kupplungseinrichtung (2; 2'; 202) nach Anspruch 19, **dadurch gekennzeichnet, dass** die Koppeleinrichtung (4; 204) zwischen einem die Ausgangsseite bildenden, vorzugsweise als Ausgangsnabe (26; 226) ausgeführten Verbindungselement zur Drehverbindung mit einer vorzugsweise als Drehwelle (28; 228) ausgeführten Eingangsseite der Abtriebsanordnung (30) und einem vorzugsweise als Nabenscheibe (24) ausgeführten Ausgangselement (64; 264) der Torsionsschwingungsdämpferanordnung (22; 222) wirksam ist.

21. Kupplungseinrichtung (2; 2') nach Anspruch 19 und nach Anspruch 4, **dadurch gekennzeichnet, dass** der erste Gegeneingriffsbereich (60) einstückig mit dem Ausgangselement (64) ausgeführt ist oder/und dass der zweite Gegeneingriffsbereich (62) einstückig mit dem Verbindungselement ausgeführt ist.

22. Kraftfahrzeug-Antriebsstrang (102), umfassend
eine vorzugsweise brennkraftmotorische erste Antriebseinheit,
eine vorzugsweise wenigstens ein Getriebe aufweisende Abtriebsanordnung (30) und
eine zwischen der ersten Antriebseinheit und der Abtriebsanordnung (30) angeordnete Kupplungseinrichtung (2; 2'; 202) nach einem der vorhergehenden Ansprüche zur Drehmomentübertragung zwischen der ersten Antriebseinheit und der Abtriebsanordnung (30).

23. Kraftfahrzeug-Antriebsstrang (102) nach Anspruch 22, **gekennzeichnet durch** eine vorzugsweise elektromotorische zweite Antriebseinheit (98), welche mit einer Eingangsseite der Abtriebsanordnung (30) in Drehmomentübertragungsverbindung steht oder bringbar ist.

24. Kraftfahrzeug-Antriebsstrang (102) nach Anspruch 23, **dadurch gekennzeichnet, dass** die Koppeleinrichtung (4; 204) in dem Entkoppelzustand eine Drehmomentübertragungsverbindung zwischen der zweiten Antriebseinheit (98) und dem ausgangbereichsseitigen Kupplungsbereich unterbricht.

25. Kraftfahrzeug, umfassend Kraftfahrzeug-Antriebsstrang (102) nach einem der Ansprüche 21 bis 24.

## Claims

1. Clutch device (2; 2'; 202) for arranging in a motor vehicle drive train (102) between a drive unit and a driven arrangement (30);
comprising an input region (6; 206) which is assigned to the drive unit, and at least one output region (8; 208) which is assigned to the driven arrangement (30);
it being possible for a drive torque which is introduced into the clutch device (2; 2'; 202) at the input region (6; 206) to be transferred to the output region (8; 208) via at least one wet-running clutch arrangement (14; 214) which is arranged in an interior space (12; 212) of a clutch housing (10; 210) of the clutch device (2; 2'; 202) and which has at least one input region-side clutch region (16; 216) and at least one output region-side clutch region (18; 218) which can be brought into frictionally locking torque transmission engagement with the input region-side clutch region (16; 216);
and a coupling device (4; 204) being provided between the output region-side clutch region (18; 218) of the wet-running clutch arrangement (14; 214) and the output region (8; 208), which coupling device (4; 204), in a coupling state, establishes a torque transmission connection between the output region-side clutch region (18; 218) and the output region (8; 208) for the transmission of the drive torque to the output region (8; 208), and which coupling device (4; 204), in a decoupling state, decouples the output region (8; 208) from the output region-side clutch region (18; 218) with interruption of the torque transmission connection;
**characterized**
**in that** an operating medium (100; 300) for the wet-running operation of the clutch arrangement (14; 214) can be fed into the clutch housing selectively via a first connector arrangement (32; 232) into the interior space (12; 212) and can be discharged via a second connector arrangement (36; 236) from the interior space (12; 212) for the realization of a first operating medium flow direction (40; 240), or can be fed via the second connector arrangement (36; 236) into the interior space (12; 212) and can be discharged via the first connector arrangement (32; 232) from the interior space (12; 212) for the realization of a second operating medium flow direction (42; 242);
and **in that** the coupling device (4; 204) can be transferred, by means of the operating medium (100; 300), between the coupling state and the decoupling state by way of reversing of the operating medium flow through the interior space (12; 212) between the first (40; 240) and the second operating medium flow direction (42; 242).

2. Clutch device (2; 2'; 202) according to Claim 1, **characterized in that** the coupling device (4; 204) comprises a coupling element (44; 244) which can be displaced axially in relation to a rotational axis (46; 246) of the clutch device (2; 2'; 202) between a coupling position (48; 248) which is assigned to the coupling state and a decoupling position (50; 250) which is assigned to the decoupling state, which coupling element (44; 244), in the coupling position (48; 248), is connected in a rotary driving manner to the output region (8; 208) and the output region-side clutch region (18; 218) and, in the decoupling position (50; 250), is decoupled from at least one of the output region (8; 208) and the output region-side clutch region (18; 218) with interruption of the rotary driving connection.

3. Clutch device (2; 2'; 202) according to Claim 2, **characterized in that** the coupling element has a first axial pressure receiving region (52; 252) and an opposite second axial pressure receiving region (54; 254) and, in a manner which is dependent on a pressure difference of operating medium pressures which act on the said pressure receiving regions, can be adjusted axially from the coupling position (48; 248) in the direction of the decoupling position (50; 250) and from the decoupling position (50; 250) in the direction of the coupling position (48; 248).

4. Clutch device (2; 2'; 202) according to Claim 2 or 3, **characterized in that** the coupling element has a first engagement region (56, 256) which is assigned to the output region (8; 208) and a second engagement region (58; 258) which is assigned to the output region-side clutch region (18; 218), **in that** a first corresponding engagement region (60; 260) which is assigned to the first engagement region (56; 256) is attached fixedly to the output region (8; 208) for conjoint rotation, **in that** a second corresponding engagement region (62; 262) which is assigned to the second engagement region (58; 258) is attached fixedly to the output region-side clutch region (18; 218) for conjoint rotation, there being a frictionally locking or positively locking rotational coupling engagement between the first engagement region (56; 256) and the first corresponding engagement region (60; 260), or it being possible for the said frictionally locking or positively locking rotational coupling engagement to be established by way of axial adjustment of the coupling element from the decoupling position (50; 250) into the coupling position (48; 248), and there being a frictionally locking or positively locking rotational coupling engagement between the second engagement region (58; 258) and the second corresponding engagement region (62; 262), or it being possible for the said frictionally locking or positively locking rotational coupling engagement to be established by way of axial adjustment of the coupling element from the decoupling position (50; 250) into the coupling position (48; 248).

5. Clutch device (2; 2'; 202) according to Claim 4, **characterized in that**, of the engagement pair which is formed by the first engagement region (56; 256) and the first corresponding engagement region (60; 260) and the engagement pair which is formed by the second engagement region (58; 258) and the second corresponding engagement region (62; 262), one engagement pair is in permanent rotational coupling engagement and the other engagement pair can be brought into the rotational coupling engagement selectively by way of axial adjustment of the coupling element from the decoupling position (50; 250) into the coupling position (48; 248).

6. Clutch device (2; 2'; 202) according to one of Claims 2 to 5, **characterized in that** the coupling device (4; 204) is configured with a synchronizing arrangement (66; 266) which comprises at least one synchronizing element (68; 268) which is or can be brought into a torque transmission connection with the coupling element and can preferably be displaced axially with respect to the latter, which synchronizing element (68; 268) can be brought into frictionally locking synchronizing engagement with an associated output region-side or clutch device-side synchronizing region (74; 274) during the transfer of the coupling device (4; 204) out of the decoupling state into the coupling state, in order to reduce a differential rotational speed between the coupling element and at least one of the output side and the output region-side clutch region (18; 218), and thus to enable or to facilitate the positioning of the coupling element in the coupling position (48; 248) in order to establish the coupling state.

7. Clutch device (2; 2'; 202) according to Claim 6, **characterized in that** at least one of the synchronizing region (74; 274) and the synchronizing element (68; 268) has a conical section external shape (72; 272) at least in sections, and the other one of the synchronizing region (74; 274) and the synchronizing element (68; 268) has a hollow-conical section internal shape (76; 276) at least in sections.

8. Clutch device (2; 2'; 202) according to Claim 6 or 7, **characterized in that** the synchronizing element (68; 268) has a first axial pressure receiving region (78; 278) and an opposite second axial pressure receiving region (80; 280), and can be displaced axially against the associated synchronizing region (74; 274) by means of a pressure difference of operating medium pressures which act on the said pressure receiving regions, in order to establish the frictionally locking synchronizing engagement with the said synchronizing region (74; 274).

9. Clutch device (2) according to one of Claims 6 to 8, **characterized in that** the synchronizing arrangement (66) is set up to exert an axial counterforce which acts counter to an axial relative movement between the synchronizing element (68) and the coupling element, in order to counteract positioning of the coupling element in the coupling position (48) before reduction of the differential rotational speed to a setpoint differential rotational speed.

10. Clutch device (2) according to Claim 9, **characterized in that** the synchronizing element (68) has a toothing system (84), and the coupling element has a corresponding toothing system (86, 58), by means of which the synchronizing element (68) and the coupling element are coupled to one another with a relative backlash, it being possible for the synchronizing element (68) and the coupling element to be rotated counter to an elastic restoring force out of the rest position relative to one another in the direction of a stop position, in order to generate the axial counterforce on the basis of a frictionally locking engagement between active faces which are assigned to the toothing systems, the active faces preferably comprising tooth faces of the toothing systems and/or surface sections of an elastic device which is arranged between the toothing system (84) and the corresponding toothing system (86, 58), exerts the elastic restoring force, and is preferably formed by at least one corrugated spring (82).

11. Clutch device (2; 202) according to Claim 4, or according to Claim 4 and one of Claims 5 to 10, **characterized in that** the first engagement region (56; 256) and the first corresponding engagement region (60; 260) and/or the second engagement region (58; 258) and the second corresponding engagement region (62; 262) of the coupling element have driving toothing systems which are or can be brought into mutual engagement and of which preferably at least one is configured with bevels (88; 288) which mechanically assist bringing of the relevant driving toothing systems of the respective engagement region and corresponding engagement region into engagement with one another and/or, with cooperation of the operating medium (100; 300), counteract positioning of the coupling element in the coupling position (48; 248) before reduction of the differential rotational speed to a setpoint differential rotational speed.

12. Clutch device (2) according to one of Claims 2 to 11, **characterized in that** the coupling device (4) has a prestressing device (90) which elastically prestresses the coupling element axially in the direction of the decoupling position (50) or preferably in the direction of the coupling position (48), which prestressing device (90) comprises, if desired, at least one cup spring.

13. Clutch device (2) according to Claim 12, **characterized in that** the prestressing device (90) is supported axially on an element of the clutch device (2), which element is in a rotary driving connection with the coupling element even in the decoupling state.

14. Clutch device (2) according to Claim 12 or 13, **characterized in that** the prestressing device (90) has a non-linear force-displacement characteristic curve in such a way that the prestressing device (90) exerts a greater prestressing force on the coupling element in a displacement section between the coupling position (48) and the decoupling position (50) than it exerts on the coupling element in the coupling position (48) and the decoupling position (50).

15. Clutch device (2) according to one of Claims 12 to 14, **characterized in that** the prestressing device (90) is set up to open at least one opening (94) in the coupling state and to close it in the decoupling state, which at least one opening (94) is flowed through at least temporarily by the operating medium and influences operating medium pressures which act on the coupling element on the basis of the operating medium flow.

16. Clutch device (2) according to one of Claims 1 to 14, **characterized in that** at least one opening (94) which is flowed through at least temporarily by the operating medium (100) and influences operating medium pressures which act on the coupling element on the basis of the operating medium flow is configured as a check valve (96) which lets through operating medium (100) to a maximum extent in the case of an operating medium flow direction of operating medium (100) which transfers into the coupling state, and does not let through any operating medium (100) or throttles the latter to a maximum extent in the case of an operating medium flow direction which transfers into the decoupling state.

17. Clutch device (2; 2'; 202) according to one of Claims 1 to 16, **characterized in that** the wet-running clutch arrangement (14; 214) can be actuated by means of the operating medium (100; 300) by way of reversing of the operating medium flow through the interior space (12; 212) between the first (40; 240) and the second operating medium flow direction (42; 242).

18. Clutch device (2; 2'; 202) according to one of Claims 1 to 16, **characterized in that** the wet-running clutch arrangement (14; 214) can be actuated independently of the operating medium flow through the interior space (12; 212), preferably by means of at least one slave cylinder which is assigned to the said wet-running clutch arrangement (14; 214) and to which pressure medium for the actuation of the clutch arrangement (14; 214) can be fed independently of the operating medium flow through the interior space (12; 212) .

19. Clutch device (2; 2'; 202) according to one of the preceding claims, **characterized by** a torsional vibration damper arrangement (22; 222), via which a torque transmission connection between the output region-side clutch region (18; 218) and the coupling device (4; 204) is established or can be established.

20. Clutch device (2; 2'; 202) according to Claim 19, **characterized in that** the coupling device (4; 204) is active between a connecting element for the rotary connection to an input side of the driven arrangement (30) which is preferably configured as a rotary shaft (28; 228), which connecting element forms the output side and is preferably configured as an output hub (26; 226), and an output element (64; 264) of the torsional vibration damper arrangement (22; 222), which output element (64; 264) is preferably configured as a hub plate (24) .

21. Clutch device (2; 2') according to Claim 19 and according to Claim 4, **characterized in that** the first corresponding engagement region (60) is configured in one piece with the output element (64), and/or **in that** the second corresponding engagement region (62) is configured in one piece with the connecting element.

22. Motor vehicle drive train (102), comprising
a first drive unit which is preferably an internal combustion engine,
a driven arrangement (30) which preferably has at least one transmission, and
a clutch device (2; 2'; 202) according to one of the preceding claims which is arranged between the first drive unit and the driven arrangement (30) for the transmission of torque between the first drive unit and the driven arrangement (30).

23. Motor vehicle drive train (102) according to Claim 22, **characterized by** a second drive unit (98) which is preferably an electric motor and is or can be brought into a torque transmission connection with an input side of the driven arrangement (30).

24. Motor vehicle drive train (102) according to Claim 23, **characterized in that**, in the decoupling state, the coupling device (4; 204) interrupts a torque transmission connection between the second drive unit (98) and the output region-side clutch region.

25. Motor vehicle, comprising a motor vehicle drive train (102) according to one of Claims 21 to 24.

## Revendications

1. Dispositif d'embrayage (2 ; 2' ; 202) destiné à être disposé dans une chaîne cinématique de véhicule automobile (102) entre une unité d'entraînement et un ensemble de sortie (30) ;
ledit dispositif d'accouplement comprenant une zone d'entrée (6 ; 206) associée à l'unité d'entraînement et au moins une zone de sortie (8 ; 208) affectée à l'ensemble de sortie (30) ;
un couple d'entraînement, injecté dans le dispositif d'embrayage (2 ; 2' ; 202) au niveau de la zone d'entrée (6 ; 206), pouvant être transféré à la zone de sortie (8 ; 208) par le biais d'au moins un ensemble d'embrayage humide (14 ; 214) qui est disposé dans l'espace intérieur (12 ; 212) d'un boîtier d'embrayage (10 ; 210) du dispositif d'embrayage (2 ; 2' ; 202) et qui comporte au moins une zone d'embrayage côté zone d'entrée (16 ; 216) et au moins une zone d'embrayage côté zone de sortie (18 ; 218) qui peut être amenée en engagement de transmission de couple par friction avec la zone d'embrayage côté zone d'entrée (16 ; 216) ;
et un dispositif d'accouplement (4 ; 204) étant prévu entre la zone d'embrayage côté zone de sortie (18 ; 218) de l'ensemble d'embrayage humide (14 ; 214) et la zone de sortie (8 ; 208) et établissant dans un état d'accouplement une liaison de transmission de couple entre la zone d'embrayage (18 ; 218) et la zone de sortie (8 ; 208) pour la transmission du couple d'entraînement à la zone de sortie (8 ; 208) et désaccouplant dans un état de désaccouplement la zone de sortie (8 ; 208) de la zone d'embrayage côté zone de sortie (18 ; 218) avec interruption de la liaison de transmission de couple ;
**caractérisé en ce que**
un milieu de fonctionnement (100 ; 300), destiné au fonctionnement de type humide de l'ensemble d'embrayage (14 ; 214), peut être amené dans le boîtier d'embrayage sélectivement dans l'espace intérieur (12 ; 212) par le biais d'un premier ensemble de raccordement (32 ; 232) et peut être évacué de l'espace intérieur (12 ; 212) par le biais d'un deuxième ensemble de raccordement (36 ; 236) pour établir un premier sens d'écoulement de milieu de fonctionnement (40 ; 240) ou peut être amené dans l'espace intérieur (12 ; 212) par le biais du deuxième ensemble de raccordement (36 ; 236) et peut être évacué de l'espace intérieur (12 ; 212) par le biais du premier ensemble de raccordement (32 ; 232) afin d'établir un deuxième sens d'écoulement du milieu de fonctionnement (42 ; 242) ;
et **en ce que** le dispositif d'accouplement (4 ; 204) peut être passé entre l'état d'accouplement et l'état de désaccouplement par l'intermédiaire du milieu de fonctionnement (100 ; 300) par inversion du flux de milieu de fonctionnement à travers l'espace intérieur (12 ; 212) entre le premier (40 ; 240) et le deuxième sens d'écoulement du milieu de fonctionnement (42 ; 242) .

2. Dispositif d'embrayage (2 ; 2' ; 202) selon la revendication 1, **caractérisé en ce que** le dispositif d'accouplement (4 ; 204) comprend un élément d'accouplement (44 ; 244) qui est déplaçable axialement, par rapport à un axe de rotation (46 ; 246) du dispositif d'embrayage (2 ; 2' ; 202), entre une position d'accouplement (48 ; 248) associée à l'état d'accouplement et une position de désaccouplement (50 ; 250) associée à l'état de désaccouplement et qui, dans la position d'accouplement (48 ; 248), est en liaison d'entraînement en rotation avec la zone de sortie (8 ; 208) et la zone d'embrayage côté zone de sortie (18 ; 218) et, dans la position de désaccouplement (50 ; 250), est désaccouplé d'au moins une parmi la zone de sortie (8 ; 208) et la zone d'embrayage côté zone de sortie (18 ; 218) avec interruption de la liaison d'entraînement en rotation.

3. Dispositif d'embrayage (2 ; 2' ; 202) selon la revendication 2, **caractérisé en ce que** l'élément d'accouplement comporte une première zone de réception de pression axiale (52 ; 252) et une deuxième zone de réception de pression axiale opposée (54 ; 254) et, en fonction d'une différence de pression entre des pressions de milieu de fonctionnement agissant sur ces zones de réception de pression, peut être déplacé axialement de la position d'accouplement (48 ; 248) en direction de la position de désaccouplement (50 ; 250) et de la position de désaccouplement (50 ; 250) en direction de la position d'accouplement (48 ; 248).

4. Dispositif d'embrayage (2 ; 2' ; 202) selon la revendication 2 ou 3, **caractérisé en ce que** l'élément d'accouplement comporte une première zone d'engagement (56 ; 256), associée à la zone de sortie (8 ; 208), et une deuxième zone d'engagement (58 ; 258) associée à la zone d'embrayage côté zone de sortie (18 ; 218), **en ce qu'**une première zone d'engagement homologue (60 ; 260) associée à la première zone d'engagement (56 ; 256) est reliée solidairement en rotation à la zone de sortie (8 ; 208), **en ce qu'**une deuxième zone d'engagement homologue (62 ; 262) associée à la deuxième zone d'engagement (58 ; 258) est reliée solidairement en rotation à la zone d'embrayage côté sortie (18 ; 218), un engagement d'accouplement en rotation étant présent entre la première zone d'engagement (56 ; 256) et la première zone d'engagement homologue (60 ; 260) ou pouvant être réalisé par déplacement axial de l'élément d'accouplement de la position de désaccouplement (50 ; 250) dans la position d'accouplement (48 ; 248) et un engagement d'accouplement en rotation étant présent entre la deuxième zone d'engagement (58 ; 258) et la deuxième zone d'engagement homologue (62 ; 262) ou pouvant être réalisé par déplacement axial de l'élément d'accouplement de la position de désaccouplement (50 ; 250) dans la position d'accouplement (48 ; 248).

5. Dispositif d'embrayage (2 ; 2' ; 202) selon la revendication 4, **caractérisé en ce que**, parmi la paire d'engagement, formée par la première zone d'engagement (56 ; 256) et la première zone d'engagement homologue (60 ; 260), et la paire d'engagement formée par la deuxième zone d'engagement (58 ; 258) et la deuxième zone d'engagement homologue (62 ; 262), une paire d'engagement est en engagement d'accouplement en rotation permanent et l'autre paire d'engagement peut être amenée en engagement d'accouplement en rotation sélectivement, par déplacement axial de l'élément d'accouplement, de la position de désaccouplement (50 ; 250) dans la position d'accouplement (48 ; 248).

6. Dispositif d'embrayage (2 ; 2' ; 202) selon l'une des revendications 2 à 5, **caractérisé en ce que** le dispositif d'accouplement (4 ; 204) est réalisé avec un ensemble de synchronisation (66 ; 266) qui comprend au moins un élément de synchronisation (68 ; 268) qui est ou peut être amené en liaison de transmission de couple avec l'élément d'accouplement, de préférence qui est déplaçable axialement par rapport à celui-ci, et qui peut être amené, au cours du passage du dispositif d'accouplement (4 ; 204) de l'état de désaccouplement à l'état d'accouplement, en engagement de synchronisation par friction avec une zone de synchronisation associée côté zone de sortie ou côté dispositif d'embrayage (74 ; 274) pour réduire une vitesse de rotation différentielle entre l'élément d'accouplement et au moins l'un parmi le côté sortie et la zone d'embrayage côté sortie (18 ; 218) et permettre ou faciliter ainsi le positionnement de l'élément d'accouplement dans la position d'accouplement (48 ; 248) pour établir l'état d'accouplement.

7. Dispositif d'embrayage (2 ; 2' ; 202) selon la revendication 6, **caractérisé en ce qu'**au moins un parmi la zone de synchronisation (74 ; 274) et l'élément de synchronisation (68 ; 268) a au moins par portions une forme extérieure en portion de cône (72 ; 272) et l'autre parmi la zone de synchronisation (74 ; 274) et l'élément de synchronisation (68 ; 268) a au moins par portions une forme intérieure en partie de cône creuse (76 ; 276) .

8. Dispositif d'embrayage (2 ; 2' ; 202) selon la revendication 6 ou 7, **caractérisé en ce que** l'élément de synchronisation (68 ; 268) comporte une première zone de réception de pression axiale (78 ; 278) et une deuxième zone de réception de pression axiale opposée (80 ; 280) et est déplaçable axialement, au moyen d'une différence de pression entre les pressions de milieu de fonctionnement agissant sur ces zones de réception de pression, vers la zone de synchronisation associée (74 ; 274) afin d'établir l'engagement de synchronisation par friction avec celle-ci.

9. Dispositif d'embrayage (2) selon l'une des revendications 6 à 8, **caractérisé en ce que** le dispositif de synchronisation (66) est conçu pour exercer une force antagoniste axiale s'opposant à un mouvement relatif axial entre l'élément de synchronisation (68) et l'élément d'accouplement afin de s'opposer à un positionnement de l'élément d'accouplement dans la position d'accouplement (48) avant de réduire la différence de vitesse de rotation à une différence de vitesse cible.

10. Dispositif d'embrayage (2) selon la revendication 9, **caractérisé en ce que** l'élément de synchronisation (68) comporte une denture (84) et l'élément d'accouplement comporte une denture homologue (86, 58), lesquelles dentures permettent d'accoupler l'élément de synchronisation (68) et l'élément d'accouplement l'un avec l'autre avec un jeu en rotation relatif, l'élément de synchronisation (68) et l'élément d'accouplement pouvant tourner l'un par rapport à l'autre d'une position de repos vers une position de butée en s'opposant à une force de rappel élastique afin de générer la force antagoniste axiale sur la base d'un engagement par friction entre les surfaces actives associées aux dentures, les surfaces actives comprenant de préférence des surfaces de dent de la denture et/ou des portions de surface d'un dispositif élastique, de préférence formé par au moins un ressort ondulé (82), qui est disposé entre la denture (84) et la denture homologue (86, 58) et qui exerce la force de rappel élastique.

11. Dispositif d'embrayage (2 ; 202) selon la revendication 4 ou selon la revendication 4 et l'une des revendications 5 à 10, **caractérisé en ce que** la première zone d'engagement (56 ; 256) et la première zone d'engagement homologue (60 ; 260) et/ou la deuxième zone d'engagement (58 ; 258) et la deuxième zone d'engagement homologue (62 ; 262) de l'élément d'accouplement comportent des dentures d'entraînement amenées ou pouvant être amenées en engagement l'une avec l'autre, dont au moins une est de préférence réalisée avec des chanfreins (88 ; 288) qui favorisent mécaniquement un engagement des dentures d'entraînement concernées de la zone d'engagement respective et de la zone d'engagement homologue et/ou qui s'opposent, par l'intervention du milieu de fonctionnement (100 ; 300), à un positionnement de l'élément d'accouplement dans la position d'accouplement (48 ; 248) avant de réduire la différence de vitesse de rotation à une différence de vitesse de rotation cible.

12. Dispositif d'embrayage (2) selon l'une des revendications 2 à 11, **caractérisé en ce que** le dispositif d'accouplement (4) est un dispositif de précontrainte (90) qui comprend éventuellement au moins une rondelle-ressort et qui précontraint élastiquement l'élément d'accouplement axialement en direction de la position de désaccouplement (50) ou, de préférence, en direction de la position d'accouplement (48).

13. Dispositif d'embrayage (2) selon la revendication 12, **caractérisé en ce que** le dispositif de précontrainte (90) est en appui axial sur un élément du dispositif d'embrayage (2) qui est également, à l'état de désaccouplement, en liaison d'entraînement en rotation avec l'élément d'accouplement.

14. Dispositif d'embrayage (2) selon la revendication 12 ou 13, **caractérisé en ce que** le dispositif de précontrainte (90) présente une courbe caractéristique force-déplacement non linéaire de sorte que le dispositif de précontrainte (90), agissant sur l'élément d'accouplement sur une portion de déplacement entre la position d'accouplement (48) et la position de désaccouplement (50), exerce sur l'élément d'accouplement une force de précontrainte plus importante que dans la position d'accouplement (48) et la position de désaccouplement (50).

15. Dispositif d'embrayage (2) selon l'une des revendications 12 à 14, **caractérisé en ce que** le dispositif de précontrainte (90) est conçu pour ouvrir à l'état accouplé au moins une ouverture (94) qui est traversée au moins temporairement par le milieu de fonctionnement et qui influe sur la base de l'écoulement de milieu de fonctionnement sur des pressions de milieu de fonctionnement agissant sur l'élément d'accouplement et pour fermer ladite ouverture à l'état désaccouplé.

16. Dispositif d'embrayage (2) selon l'une des revendications 1 à 14, **caractérisé en ce qu'**au moins une ouverture (94), traversée au moins temporairement par le milieu de fonctionnement (100) et influant, sur la base du flux de milieu de fonctionnement, sur des pressions de milieu de fonctionnement agissant sur l'élément d'accouplement, est conçue comme un clapet anti-retour (96) qui laisse passer au maximum le milieu de fonctionnement (100) dans le cas d'un sens de flux de milieu de fonctionnement conduisant à l'état d'accouplement et ne laisse pas passer de milieu de fonctionnement (100) dans le cas d'un sens de flux de milieu de fonctionnement (100) conduisant à l'état de désaccouplement ou restreint ledit milieu de fonctionnement au maximum.

17. Dispositif d'embrayage (2 ; 2' ; 202) selon l'une des revendications 1 à 16, **caractérisé en ce que** l'ensemble d'embrayage humide (14 ; 214) par l'intermédiaire du milieu de fonctionnement (100 ; 300) par inversion du flux de milieu de fonctionnement à travers l'espace intérieur (12 ; 212) entre le premier (40 ; 240) et le deuxième sens d'écoulement du milieu de fonctionnement (42 ; 242).

18. Dispositif d'embrayage (2 ; 2' ; 202) selon l'une des revendications 1 à 16, **caractérisé en ce que** l'ensemble d'embrayage humide (14 ; 214) peut être actionné indépendamment du flux de milieu de fonctionnement à travers l'espace intérieur (12 ; 212), de préférence au moyen d'au moins un de ces cylindres récepteurs associés, auquel un milieu sous pression peut être amené pour actionner l'ensemble d'embrayage (14 ; 214) indépendamment du flux de milieu de fonctionnement à travers l'espace intérieur (12 ; 212).

19. Dispositif d'embrayage (2 ; 2' ; 202) selon l'une des revendications précédentes, **caractérisé par** un ensemble d'amortissement de vibrations de torsion (22 ; 222), par le biais duquel une liaison de transmission de couple est établie ou peut être établie entre la zone d'accouplement côté zone de sortie (18 ; 218) et le dispositif d'accouplement (4 ; 204).

20. Dispositif d'embrayage (2 ; 2' ; 202) selon la revendication 19, **caractérisé en ce que** le dispositif d'accouplement (4 ; 204) agit entre un élément de liaison, qui forme le côté sortie et qui est de préférence réalisé sous la forme d'un moyeu de sortie (26 ; 226) et qui est destiné à établir la liaison en rotation avec un côté entrée, réalisé de préférence sous la forme d'un arbre rotatif (28 ; 228), de l'ensemble de sortie (30), et un élément de sortie (64 ; 264), de préférence conçu comme un disque formant moyeu (24), de l'ensemble d'amortissement de vibrations de torsion (22 ; 222).

21. Dispositif d'embrayage (2 ; 2') selon la revendication 19 et selon la revendication 4, **caractérisé en ce que** la première zone d'engagement homologue (60) est réalisée d'une seule pièce avec l'élément de sortie (64) ou/et **en ce que** la deuxième zone d'engagement homologue (62) est réalisée d'une seule pièce avec l'élément de liaison.

22. Chaîne cinématique de véhicule automobile (102), comprenant
une première unité d'entraînement de préférence de type moteur à combustion interne,
un ensemble de sortie (30) comportant de préférence au moins une transmission
et
un dispositif d'embrayage (2 ; 2' ; 202) selon l'une des revendications précédentes qui est disposé entre la première unité d'entraînement et l'ensemble de sortie (30) et qui est destiné à la transmission de couple entre la première unité d'entraînement et l'ensemble de sortie (30).

23. Chaîne cinématique de véhicule automobile (102) selon la revendication 22, **caractérisée par** une deuxième unité d'entraînement (98), de préférence de type moteur électrique, qui est ou peut être amenée en liaison de transmission de couple avec un côté entrée de l'ensemble de sortie (30).

24. Chaîne cinématique de véhicule automobile (102) selon la revendication 23, **caractérisée en ce que** le dispositif d'accouplement (4 ; 204) interrompt, dans l'état de désaccouplement, une liaison de transmission de couple entre la deuxième unité d'entraînement (98) et la zone d'embrayage côté sortie.

25. Véhicule automobile, comprenant une chaîne cinématique de véhicule automobile (102) selon l'une des revendications 21 à 24.
